# EUROPÄISCHE PATENTSCHRIFT

(11) **EP 1 638 246 B1**
(45) Veröffentlichungstag und Bekanntmachung des Hinweises auf die Patenterteilung: **06.01.2010**
(21) Anmeldenummer: 05019733.4
(22) Anmeldetag: 10.09.2005
(51) Int. Cl.: H04L 9/08, G07B 17/00

(54) **Verfahren zum Austausch von Kryptographiedaten**
Method for substitution of cryptogtaphic data
Méthode d'échange des données cryptographiques

(30) Priorität: 17.09.2004 DE 102004045574
(43) Veröffentlichungstag der Anmeldung: 22.03.2006
(73) Patentinhaber: Francotyp-Postalia GmbH, 16547 Birkenwerder (DE)
(72) Erfinder: Bleumer, Gerrit, Dr., 16552 Schildow (DE); Heinrich, Clemens, 12161 Berlin (DE); Baum, Volker, 13189 Berlin (DE)
(74) Vertreter: Karlhuber, Mathias

(56) Entgegenhaltungen:
- EP-A- 0 942 398
- EP-A- 1 022 684
- US-A- 5 708 710
- US-A- 6 041 317

## Beschreibung

Die vorliegende Erfindung betrifft ein Verfahren zum Austausch von einer ersten Datenverarbeitungseinrichtung zugeordneten ersten Kryptographiedaten, insbesondere eines ersten kryptographischen Schlüssels oder eines ersten kryptographischen Zertifikats, bei dem die in einem ersten Speicher der ersten Datenverarbeitungseinrichtung gespeicherten bisherigen ersten Kryptographiedaten, denen ein bisheriges erstes Verfallskriterium zugeordnet ist, in einem ersten Austauschschritt durch neue erste Kryptographiedaten ausgetauscht werden. Dabei erfolgt in dem ersten Austauschschritt eine Kommunikation mit einer entfernten zweiten Datenverarbeitungseinrichtung. Weiterhin wird der erste Austauschschritt spätestens nach Erfüllung des bisherigen ersten Verfallskriteriums durchgeführt. Die vorliegende Erfindung betrifft weiterhin eine Anordnung, die sich zur Durchführung des erfindungsgemäßen Verfahrens eignet.

Kryptographiedaten wie kryptographische Schlüssel oder kryptographische Zertifikate stellen bei einer Vielzahl von Anwendungen in Verbindung mit entsprechenden kryptographischen Algorithmen die Absicherung bzw. Authentifizierung von Daten sicher. So werden kryptographische Schlüssel zusammen mit entsprechenden Verschlüsselungsalgorithmen verwendet, um Daten zu verschlüsseln und sie so vor unbefugter Einsichtnahme zu schützen. Ebenso können sie verwendet werden um Daten zu signieren und so deren Ursprung und Authentizität nachvollziehbar zu machen.

Grundlage aller dieser Sicherungsmechanismen ist, dass zumindest ein Teil der verwendeten kryptographischen Schlüssel geheim gehalten wird, d. h. nur einem sehr eng begrenzten Nutzerkreis, oftmals nur einem einzigen Nutzer, bekannt ist. Wird diese Geheimhaltung durchbrochen, also beispielsweise ein geheimer Schlüssel kompromittiert, ist die Sicherheit nicht mehr gewährleistet. Je nachdem, an welcher Stelle der kompromittierte geheime Schlüssel in einer kryptographischen Hierarchie steht, kann damit unter Umständen die Sicherheit einer oder mehrerer abhängiger Schlüsselinstanzen mit jeweils einer Vielzahl von kryptographischen Schlüsseln verloren gehen.

Den üblicherweise verwendeten kryptographischen Verfahren haftet allen der Nachteil an, dass zwar mehr oder weniger enormer Rechenaufwand betrieben werden muss, um einen geheimen Schlüssel nur anhand der mit ihm erzeugten verschlüsselten Daten zu ermitteln, mit zunehmender Nutzungsdauer oder zunehmendem Nutzungsumfang des geheimen Schlüssels aber die Wahrscheinlichkeit steigt, dass der Schlüssel auf diesem Wege kompromittiert wird. Mit anderen Worten wird das Sicherungssystem mit zunehmender Nutzung oder Nutzungsdauer eines bestimmten Schlüssels stetig unsicherer.

Um diesem Nachteil abzuhelfen, ist es üblich, die von einer Datenverarbeitungseinrichtung verwendeten Kryptographiedaten, wie kryptographische Schlüssel oder kryptographische Zertifikate, von Zeit zu Zeit durch neue Kryptographiedaten auszutauschen, um einen gewissen Sicherheitslevel nicht zu unterschreiten. Üblicherweise wird den Kryptographiedaten hierzu als Austauschkriterium ein zeitliches oder nicht-zeitliches Verfallskriterium zugeordnet, bei dessen Erfüllung dann der Austausch der Kryptographiedaten stattfindet.

So ist es aus der US 6,041,317 bekannt, ein Schlüsselpaar eines Sicherheitsmoduls einer Frankiermaschine immer dann auszutauschen, wenn ein bestimmtes Verfailskriterium erfüllt ist, beispielsweise eine bestimmte Anzahl von kryptographischen Operationen mit dem Schlüsselpaar des Sicherheitsmoduls durchgeführt wurden. Hierzu überwacht das Sicherheitsmodul das Verfallskriterium. Ist das Verfallskriterium erfüllt, generiert das Sicherheitsmodul ein neues Schlüsselpaar und wechselt das bisherige Schlüsselpaar unter Kommunikation mit einer entfernten Datenzentrale aus.

Dieses Verfahren liefert zwar zuverlässig in unter Sicherheitsaspekten akzeptablen Abständen neue Kryptographiedaten. Es hat jedoch den Nachteil, dass in dem jeweiligen Sicherheitsmodul eine entsprechend aufwändige Überwachungsroutine implementiert werden muss, die das Verfallskriterium überwacht, Im Übrigen ist keine Überwachung von nicht dem Sicherheitsmodul inhärenten bzw. bekannten Austauschkriterien möglich, die einen Austausch der Kryptographiedaten erforderlich machen.

Aus der US 5,708,710 ist weiterhin ein gattungsgemäßes Verfahren zum Austausch von Kryptographiedaten einer ersten Datenverarbeitungseinrichtung (hier der kryptographischen Schlüssel eines Mobiltelefons) bekannt, bei dem versucht wird, die Kompromittierung eines kryptographischen Schlüssels der Datenverarbeitungseinrichtung über eine gröbere Anzahl von unerwarteten Authentifizierungsnachrichten dadurch zu erschweren, dass bei Erreichen einer bestimmten Anzahl solcher unerwarteter Authentifizierungsnachrichten ein automatischer Austausch des kryptographischen Schlüssels erfolgt. Zwar kann hierdurch die Kompromittierung erschwert werden, es besteht jedoch der Nachteil, dass durch eine entsprechend hohe Häufigkeit solcher unerwarteter Authentifizierungsnachrichten ein häufiger Austausch der kryptographischen Schlüssel erforderlich ist, wodurch Ressourcen des Systems gebunden werden und die Systemleistung sinkt. Zudem ist es möglich, dass in einem solchen Fall durch die häufige Generierung neuer kryptographischer Schlüssel Rückschlüsse auf den Generierungsalgorithmus der kryptographischen Schlüssel gezogen werden können, welche die Kompromittierung der kryptographischen Schlüssel erleichtern.

Der vorliegenden Erfindung liegt daher die Aufgabe zu Grunde, ein Verfahren bzw. eine Anordnung der eingangs genannten Art zur Verfügung zu stellen, welches bzw. welche die oben genannten Nachteile nicht oder zumindest in geringerem Maße aufweist und insbesondere eine Kompromittierung der kryptographischen Schlüssel zu erschweren, ohne die Gefahr einer Reduktion der Systemleistung zu schaffen.

Die vorliegende Erfindung löst diese Aufgabe ausgehend von einem Verfahren gemäß dem Oberbegriff des Anspruchs 1 durch die im kennzeichnenden Teil des Anspruchs 1 angegebenen Merkmale. Sie löst diese Aufgabe weiterhin ausgehend von einer Anordnung gemäß dem Oberbegriff des Anspruchs 21 durch die im kennzeichnenden Teil des Anspruchs 21 angegebenen Merkmale.

Der vorliegende Erfindung liegt die technische Lehre zu Grunde, dass eine einfache Überwachung beliebig vorgebbarer Austauschkriterien möglich ist, wenn die Erfüllung eines den bisherigen ersten Kryptographiedaten und/oder der ersten Datenverarbeitungseinrichtung zugeordneten ersten Austauschkriteriums in der zweiten Datenverarbeitungseinrichtung überwacht wird und die zweite Datenverarbeitungseinrichtung den ersten Austauschschritt nach Erfüllung des ersten Austauschkriteriums initiiert, wobei die Generierung der neuen ersten Kryptographiedaten in Abhängigkeit von der Erfüllung wenigstens eines Generierungskriteriums erfolgt.

Die Überwachung des ersten Austauschkriteriums in der zweiten Datenverarbeitungseinrichtung erübrigt dabei zum einen die aufwändige Implementierung entsprechender Überwachungsmechanismen in der jeweiligen ersten Datenverarbeitungseinrichtung. Weiterhin können auch beliebige, nicht der ersten Datenverarbeitungseinrichtung inhärente bzw. bekannte oder von ihr nicht berechenbare Austauschkriterien berücksichtigt werden.

So kann beispielsweise ein beliebig vorgegebenes Datum oder dergleichen als Austauschkriterium gewählt werden. Ist dieses Austauschkriterium dann für alle oder einzelne erste Datenverarbeitungseinrichtungen gesetzt, wird der Austausch der ersten Kryptographiedaten initiiert, sobald das gesetzte Datum erreicht wurde - das Austauschkriterium also erfüllt ist - und eine der betreffenden ersten Datenverarbeitungseinrichtungen die zweite Datenverarbeitungseinrichtung kontaktiert. Dieser Kontakt kann beispielsweise im Rahmen einer turnusmäßigen Kommunikation der ersten Datenverarbeitungseinrichtung mit der zweiten Datenverarbeitungseinrichtung erfolgen, die unter Umständen zu einem anderen Zweck als dem Austausch der ersten Kryptographiedaten - beispielsweise zum Nachladen von Porto in eine Frankiermaschine - von der ersten Datenverarbeitungseinrichtung initiiert wurde.

Das erste Austauschkriterium kann von beliebiger Seite vorgegeben werden. Bevorzugt wird das erste Austauschkriterium jedoch durch die zweite Datenverarbeitungseinrichtung vorgegeben.

Das Austauschkriterium kann grundsätzlich eine beliebige Beziehung zum bisherigen ersten Verfallskriterium haben, das den bisherigen ersten Kryptographiedaten zugeordnet ist. Insbesondere kann das Austauschkriterium gleich dem bisherigen ersten Verfallskriterium gewählt sein, sodass der Austausch der ersten Kryptographiedaten frühestens dann erfolgt, wenn das erste Verfallskriterium erfüllt ist, die Gültigkeit der ersten Kryptographiedaten also nicht mehr gegeben ist. Um Situationen zu vermeiden, in denen unter Verwendung der ersten Kryptographiedaten durchgeführte Sicherheitsoperationen wegen der fehlenden Gültigkeit der bisherigen ersten Kryptographiedaten vorübergehend nicht mehr zur Verfügung stehen, ist das erste Austauschkriterium bevorzugt so gewählt, dass die Erfüllung des ersten Austauschkriteriums zeitlich vor der Erfüllung des bisherigen ersten Verfallskriteriums liegt.

Der Zeitraum zwischen dem Eintreten des ersten Austauschkriteriums und dem Eintreten des bisherigen ersten Verfallskriteriums ist dabei wenn möglich so gewählt, dass in diesem Zeitraum normalerweise wenigstens eine Kommunikation zwischen der ersten Datenverarbeitungseinrichtung und der zweiten Datenverarbeitungseinrichtung stattfindet. Hiermit ist sichergestellt, dass im Normalfall ein Austausch der ersten Kryptographiedaten erfolgt, bevor das bisherige erste Verfallskriterium eintritt.

Wie erwähnt, kann sowohl das erste Verfallskriterium als auch das erste Austauschkriterium ein beliebiges Kriterium sein. So kann das erste Verfallskriterium und/oder das erste Austauschkriterium ein zeitliches Kriterium sein. Ebenso kann das erste Verfallskriterium und/oder das erste Austauschkriterium ein nicht-zeitliches Kriterium sein. Insbesondere können eines oder beide ein von der Nutzung der ersten Datenverarbeitungseinrichtung abhängiges Kriterium sein. So kann als Kriterium beispielsweise das Erreichen einer bestimmten Anzahl von kryptographischen Operationen unter Verwendung der ersten Kryptographiedaten vorgesehen sein. Ebenso kann es sich bei dem Kriterium um ein von den bisherigen ersten Kryptographiedaten, beispielsweise dem Umfang der bisherigen ersten Kryptographiedaten (z. B. der Schlüssellänge von kryptographischen Schlüsseln), abhängiges Kriterium handeln,

Bei bevorzugten Varianten des erfindungsgemäßen Verfahrens ist vorgesehen, dass den neuen ersten Kryptographiedaten ein neues erstes Gültigkeitskriterium zugeordnet wird, wobei die Erfüllung des neuen ersten Gültigkeitskriteriums den Beginn der Gültigkeit der neuen ersten Kryptographiedaten definiert. Das neue erste Gültigkeitskriterium ist dabei so gewählt, dass seine Erfüllung spätestens mit der Erfüllung des bisherigen ersten Verfallskriteriums eintritt. Hierdurch kann ein nahtloser Übergang zwischen der Gültigkeit der bisherigen ersten Kryptographiedaten und der Gültigkeit der neuen ersten Kryptographiedaten erzielt werden.

Insbesondere kann hier vorgesehen sein, dass die bisherigen ersten Kryptographiedaten noch bis zur Erfüllung des bisherigen ersten Verfallskriteriums verwendet werden, während die neuen ersten Kryptographiedaten zwar schon in den ersten Speicher geladen, aber noch nicht gültig sind.

Ebenso kann das neue erste Gültigkeitskriterium bei vorteilhaften Varianten der Erfindung so gewählt sein, dass seine Erfüllung vor der Erfüllung des bisherigen ersten Verfallskriteriums eintritt. Dies ermöglicht in einfacher Weise Konstellationen, bei denen sowohl die bisherigen ersten Kryptographiedaten als auch die neuen ersten Kryptographiedaten für einen überlappenden Zeitraum beide gültig sind und nebeneinander verwendet werden können.

Dies ist insbesondere dann von Vorteil, wenn die ersten Kryptographiedaten in einer kryptographischen Hierarchie nicht in der untersten Ebene angesiedelt sind, sondern von ihnen abhängige Instanzen von Kryptographiedaten existieren. Hier können dann die bisherigen ersten Kryptographiedaten als auch die neuen ersten Kryptographiedaten solange nebeneinander verwendet werden, bis die kryptographische Bindung der abhängigen Instanzen auf die neuen ersten Kryptographiedaten, beispielsweise ebenfalls durch Austausch der abhängigen Instanzen von Kryptographiedaten, transferiert wurde.

Bei bevorzugten Varianten des erfindungsgemäßen Verfahrens ist demgemäß vorgesehen, dass die neuen ersten Kryptographiedaten und die bisherigen ersten Kryptographiedaten zumindest bis zur Erfüllung des bisherigen ersten Verfallskriteriums beide in dem ersten Speicher gespeichert sind. Hierbei versteht es sich, dass auch vorgesehen sein kann, dass mehrere Generationen von ersten Kryptographiedaten, gegebenenfalls sogar sämtliche Generationen der ersten Kryptographiedaten, nebeneinander in dem ersten Speicher gespeichert bleiben.

Das erste Austauschkriterium kann einmalig oder für einen längeren Zeitraum unverändert vorgegeben werden. So kann beispielsweise ein nutzungsabhängiges erstes Austauschkriterium über mehrere Austauschschritte hinweg unverändert bleiben. Bei vorteilhaften Varianten des erfindungsgemäßen Verfahrens ist jedoch vorgesehen, dass das erste Austauschkriterium bei Abschluss des ersten Austauschschritts modifiziert wird.

Der oben beschriebene Austausch der Kryptographiedaten kann an beliebigen Stellen bzw. Hierarchieebenen innerhalb einer kryptographischen Hierarchie vorgenommen werden. Mit anderen Worten können die Kryptographiedaten einer beliebigen Instanz innerhalb einer kryptographischen Hierarchie nach dem beschriebenen Verfahren ausgetauscht werden. Werden dabei die Kryptographiedaten einer Instanz ausgetauscht, die nicht auf der untersten Hierarchieebene angesiedelt ist, erfordert dies in der Regel auch einen Austausch der Kryptographiedaten in den untergeordneten Ebenen, um die kryptographische Bindung zwischen den Instanzen auf eine neue Generation von Kryptographiedaten übergehen zu lassen.

Bei bevorzugten Varianten des erfindungsgemäßen Verfahrens werden daher zum Austausch von der zweiten Datenverarbeitungseinrichtung zugeordneten zweiten Kryptographiedaten, insbesondere eines zweiten kryptographischen Schlüssels oder eines zweiten kryptographischen Zertifikats, die in einem zweiten Speicher der zweiten Datenverarbeitungseinrichtung gespeicherten bisherigen zweiten Kryptographiedaten, denen ein bisheriges zweites Verfallskriterium zugeordnet ist, in einem zweiten Austauschschritt durch neue zweite Kryptographiedaten ausgetauscht. Weiterhin wird der zweite Austauschschritt spätestens nach Erfüllung des bisherigen zweiten Verfallskriteriums durchgeführt.

Der zweite Austauschschritt kann alleine in der zweiten Datenverarbeitungseinrichtung ausgelöst und durchgeführt werden, wenn diese an einer entsprechend hohen Stelle in einer kryptographischen Hierarchie angeordnet ist. Bei anderen Varianten erfolgt der Austausch der zweiten Kryptographiedaten bevorzugt unter Beteiligung einer, in der kryptographischen Hierarchie bevorzugt übergeordneten, dritten Datenverarbeitungseinrichtung.

Es ist daher bei bevorzugten Varianten des erfindungsgemäßen Verfahrens vorgesehen, dass in dem zweiten Austauschschritt eine Kommunikation mit einer entfernten dritten Datenverarbeitungseinrichtung erfolgt. Die Erfüllung eines den bisherigen zweiten Kryptographiedaten und/oder der zweiten Datenverarbeitungseinrichtung zugeordneten zweiten Austauschkriteriums wird dann in der dritten Datenverarbeitungseinrichtung überwacht und die dritte Datenverarbeitungseinrichtung initiiert dann den zweiten Austauschschritt nach Erfüllung des zweiten Austauschkriteriums.

Analog zu den obigen Ausführungen kann auch hier das zweite Austauschkriterium durch die dritte Datenverarbeitungseinrichtung vorgegeben werden. Weiterhin kann auch hier in ähnlicher Weise die Erfüllung des zweiten Austauschkriteriums vor der Erfüllung des bisherigen zweiten Verfallskriteriums liegen.

Auch das zweite Verfallskriterium und/oder das zweite Austauschkriterium können wieder ein beliebiges ein zeitliches oder nicht-zeitliches Kriterium, beispielsweise ein von der Nutzung der zweiten Datenverarbeitungseinrichtung abhängiges Kriterium, sein. Ebenso kann es sich bei diesem Kriterium um ein von den bisherigen zweiten Kryptographiedaten, beispielsweise dem Umfang der bisherigen zweiten Kryptographiedaten (z. B. der Schlüssellänge von kryptographischen Schlüsseln), abhängiges Kriterium handeln.

Auch den neuen zweiten Kryptographiedaten kann ein neues zweites Gültigkeitskriterium zugeordnet werden, wobei die Erfüllung des neuen zweiten Gültigkeitskriteriums den Beginn der Gültigkeit der neuen zweiten Kryptographiedaten definiert. Die obigen Ausführungen zu den ersten Kryptographiedaten gelten hier sinngemäß. Dies gilt ebenso für die Varianten, bei denen auch die Erfüllung des neuen zweiten Gültigkeitskriteriums spätestens mit der Erfüllung des bisherigen zweiten Verfallskriteriums eintritt, insbesondere vor der Erfüllung des bisherigen zweiten Verfallskriteriums eintritt.

Bei vorteilhaften Varianten des erfindungsgemäßen Verfahrens ist vorgesehen, dass die neuen zweiten Kryptographiedaten und die bisherigen zweiten Kryptographiedaten zumindest bis zur Erfüllung des bisherigen zweiten Verfallskriteriums beide in dem zweiten Speicher gespeichert sind. Hierdurch ist es möglich, die neuen zweiten Kryptographiedaten und die bisherigen zweiten Kryptographiedaten nebeneinander zu nutzen. Dies ist erwähntermaßen von Vorteil, wenn eine kryptographische Abhängigkeit der ersten Kryptographiedaten von den zweiten Kryptographiedaten besteht. In diesem Fall können die bisherigen zweiten Kryptographiedaten noch so lange genutzt werden, bis die ersten Kryptographiedaten ebenfalls ausgetauscht sind. Hierdurch wird erreicht, dass stets eine gültige kryptographische Bindung zwischen der ersten Datenverarbeitungseinrichtung und der zweiten Datenverarbeitungseinrichtung besteht.

Vorzugsweise ist dabei vorgesehen, dass das erste Austauschkriterium in Abhängigkeit von dem neuen zweiten Gültigkeitskriterium gewählt wird. Hierdurch kann der Austausch der ersten Kryptographiedaten einfach an den Austausch der zweiten Kryptographiedaten gekoppelt werden. Vorzugsweise wird das erste Austauschkriterium gleich dem neuen zweiten Gültigkeitskriterium gewählt. Mit anderen Worten wird der Austausch der ersten Kryptographiedaten in die Wege geleitet, sobald die Gültigkeit der neuen zweiten Kryptographiedaten vorliegt. Dies kann beispielsweise eine rein zeitliche Vorgabe sein, wenn das neue zweite Gültigkeitskriterium das Erreichen eines Gültigkeitszeitpunkts der neuen zweiten Kryptographiedaten ist.

Das erste Austauschkriterium kann für jede erste Datenverarbeitungseinrichtung einzeln vorgegeben werden. Bei bevorzugten Varianten des erfindungsgemäßen Verfahrens ist jedoch vorgesehen, dass ein gemeinsames erstes Austauschkriterium für eine Mehrzahl von ersten Datenverarbeitungseinrichtungen vorgegeben wird. So kann beispielsweise im Fall einer tatsächlichen oder zu befürchtenden Kompromittierung von Kryptographiedaten, die den ersten Kryptographiedaten einer Mehrzahl von ersten Datenverarbeitungseinrichtungen in einer kryptographischen Hierarchie übergeordnet sind, vorgesehen sein, dass für diese Mehrzahl von ersten Datenverarbeitungseinrichtungen ein gemeinsames erstes Austauschkriterium vorgegeben wird, welches den sofortigen Austausch der ersten Kryptographiedaten beim nächsten Kontakt mit der zweiten Datenverarbeitungseinrichtung erzwingt.

Der Austausch der jeweiligen Kryptographiedaten kann auf beliebige geeignete Weise erfolgen. So können einfach vorgegebene neue Kryptographiedaten in die jeweilige Datenverarbeitungseinrichtung geladen werden. Ebenso ist es möglich, dass die neuen Kryptographiedaten im Rahmen des Austauschs erst generiert werden. Hierbei können beliebige Verfahren bzw. Algorithmen zum Generieren der neuen Kryptographiedaten Anwendung finden. Die Generierung der neuen Kryptographiedaten kann sowohl in der ersten als auch in der zweiten Datenverarbeitungseinrichtung erfolgen.

Bei dem erfindungsgemäßen Verfahren handelt es sich um ein Verfahren, das von der Erfüllung mindestens eines zeitlichen oder nicht-zeitlichen Generierungskriteriums abhängt. So kann beispielsweise im Zusammenhang mit einem zeitlichen Generierungskriterium vorgesehen sein, dass die generierten neuen Kryptographiedaten ab bestimmten Zeitpunkten jeweils einen um einen bestimmten Betrag erhöhten Umfang haben. Im Fall von kryptographischen Schlüsseln kann dies bedeuten, dass die neu generierten Schlüssel ab bestimmten Zeitpunkten, beispielsweise jährlich, eine um N bit erhöhte Länge aufweisen. Ebenso kann der Generierungsalgorithmus der neuen Kryptographiedaten zu bestimmten Zeiten, beispielsweise monatlich, wechseln bzw. modifiziert werden.

Ebenso kann festgelegt sein, dass zu bestimmten Zeiten mehrere Generierungsalgorithmen für die neuen Kryptographiedaten in bestimmter Weise, z. B. parallel oder abwechselnd, verwendet werden.

Im Zusammenhang mit einem nicht-zeitlichen Generierungskriterium kann beispielsweise vorgesehen sein, dass der Generierungsalgorithmus der neuen Kryptographiedaten in Abhängigkeit von dem Umfang der Nutzung der bisherigen Kryptographiedaten gewählt wird. So kann beispielsweise vorgesehen sein, dass bei umfangreicher Nutzung der bisherigen Kryptographiedaten über eine bestimmte Nutzungsschwelle hinaus neue Kryptographiedaten mit erhöhtem Umfang generiert werden. Im Fall von kryptographischen Schlüsseln kann dies bedeuten, dass die neu generierten Schlüsseln bei einer Nutzung der bisherigen Schlüssel über ein bestimmtes Maß hinaus eine um N bit erhöhte Länge aufweisen, um das Risiko einer Kompromittierung zu reduzieren.

Ebenso können weitere nicht-zeitliche Generierungskriterien verwendet werden. Beispielsweise kann ein beliebiges nicht-zeitliches Generierungskriterium durch die zweite bzw. dritte Datenverarbeitungseinrichtung vorgegeben werden.

Es sei an dieser Stelle erwähnt, dass die soeben beschriebene Steuerung der Generierung der neuen Kryptographiedaten in Abhängigkeit von einem oder mehreren zeitlichen oder nicht-zeitlichen Generierungskriterien einen eigenständig schutzfähigen Erfindungsgedanken darstellt, der von der oben beschriebenen Überwachung des Austauschkriteriums durch die zweite Datenverarbeitungseinrichtung unabhängig ist.

Die vorliegende Erfindung betrifft weiterhin eine Anordnung zum Austausch von einer ersten Datenverarbeitungseinrichtung zugeordneten ersten Kryptographiedaten, insbesondere eines ersten kryptographischen Schlüssels oder eines ersten kryptographischen Zertifikats, mit einer ersten Datenverarbeitungseinrichtung und einer von der ersten Datenverarbeitungseinrichtung entfernten zweiten Datenverarbeitungseinrichtung, die mit der ersten Datenverarbeitungseinrichtung über ein Kommunikationsnetz verbindbar ist. Die erste Datenverarbeitungseinrichtung weist dabei einen ersten Speicher auf, in dem die bisherigen ersten Kryptographiedaten gespeichert sind, denen ein bisheriges erstes Verfallskriterium zugeordnet ist. Die erste Datenverarbeitungseinrichtung und die zweite Datenverarbeitungseinrichtung sind zum Austausch der bisherigen ersten Kryptographiedaten in dem ersten Speicher durch neue erste Kryptographiedaten unter gegenseitiger Kommunikation spätestens nach Erfüllung des bisherigen ersten Verfallskriteriums ausgebildet. Weiterhin ist die zweite Datenverarbeitungseinrichtung zur Überwachung der Erfüllung eines den bisherigen ersten Kryptographiedaten und/oder der ersten Datenverarbeitungseinrichtung zugeordneten ersten Austauschkriteriums ausgebildet. Weiterhin ist die zweite Datenverarbeitungseinrichtung zum Initiieren des Austauschs der bisherigen ersten Kryptographiedaten nach Erfüllung des ersten Austauschkriteriums ausgebildet. Erfindungsgemäß ist die zweite Datenverarbeitungseinrichtung oder die erste Datenverarbeitungseinrichtung zur Generierung der neuen ersten Kryptographiedaten in Abhängigkeit von der Erfüllung wenigstens eines Generierungskriteriums ausgebildet.

Diese Anordnung eignet sich zur Durchführung des oben beschriebenen erfindungsgemäßen Verfahrens. Weiterhin lassen sich mit ihr die oben beschriebenen Varianten und Vorteile des erfindungsgemäßen Verfahrens in gleichem Maße realisieren, sodass diesbezüglich auf die obigen Ausführungen Bezug genommen wird.

Die zweite Datenverarbeitungseinrichtung ist bevorzugt zum Vorgeben des ersten Austauschkriteriums ausgebildet. Weiter vorzugsweise ist sie zur Vorgabe des oben beschriebenen neuen ersten Gültigkeitskriteriums für die neuen ersten Kryptographiedaten ausgebildet. Weiter vorzugsweise ist sie zum oben beschriebenen Modifizieren des ersten Austauschkriteriums bei Abschluss des Austauschs der ersten Kryptographiedaten ausgebildet ist.

Die erste Datenverarbeitungseinrichtung ist bevorzugt zum Speichern sowohl der neuen ersten Kryptographiedaten als auch der bisherigen ersten Kryptographiedaten zumindest bis zur Erfüllung des bisherigen ersten Verfaliskriteriums in dem ersten Speicher ausgebildet ist.

Bei bevorzugten Varianten der erfindungsgemäßen Anordnung ist zum Austausch von der zweiten Datenverarbeitungseinrichtung zugeordneten zweiten Kryptographiedaten, insbesondere eines zweiten kryptographischen Schlüssels oder eines zweiten kryptographischen Zertifikats, eine dritte Datenverarbeitungseinrichtung vorgesehen. Die zweite Datenverarbeitungseinrichtung weist dann einen zweiten Speicher auf, in dem die bisherigen zweiten Kryptographiedaten, denen ein bisheriges zweites Verfallskriterium zugeordnet ist, gespeichert sind. Weiterhin sind die zweite Datenverarbeitungseinrichtung und die dritte Datenverarbeitungseinrichtung dann zum Austausch der bisherigen zweiten Kryptographiedaten in dem zweiten Speicher durch neue zweite Kryptographiedaten unter gegenseitiger Kommunikation spätestens nach Erfüllung des bisherigen zweiten Verfallskriteriums ausgebildet.

Die dritte Datenverarbeitungseinrichtung ist bevorzugt zur oben beschriebenen Überwachung der Erfüllung eines den bisherigen zweiten Kryptographiedaten und/oder der zweiten Datenverarbeitungseinrichtung zugeordneten zweiten Austauschkriteriums ausgebildet. Weiterhin ist sie dann zum Initiieren des Austauschs der bisherigen zweiten Kryptographiedaten nach Erfüllung des zweiten Austauschkriteriums ausgebildet. Vorzugsweise ist die dritte Datenverarbeitungseinrichtung zur Vorgabe des zweiten Austauschkriteriums ausgebildet.

Bei bevorzugten Varianten der erfindungsgemäßen Anordnung ist die zweite Datenverarbeitungseinrichtung zum Speichern sowohl der neuen zweiten Kryptographiedaten als auch der bisherigen zweiten Kryptographiedaten zumindest bis zur Erfüllung des bisherigen zweiten Verfallskriteriums in dem zweiten Speicher ausgebildet. Hierdurch ist die oben beschriebene parallele Verwendung der alten und neuen zweiten Kryptographiedaten für einen bestimmten Zeitraum möglich.

Bei bevorzugten Varianten der erfindungsgemäßen Anordnung ist die dritte Datenverarbeitungseinrichtung zur Vorgabe des ersten Austauschkriteriums in Abhängigkeit von dem neuen zweiten Gültigkeitskriterium ausgebildet, um den Austausch wie oben beschrieben rechtzeitig zu initiieren.

Bei weiteren bevorzugten Varianten der erfindungsgemäßen Anordnung ist eine erste Anzahl von mit der zweiten Datenverarbeitungseinrichtung verbindbaren ersten Datenverarbeitungseinrichtungen vorgesehen und die zweite Datenverarbeitungseinrichtung zur Vorgabe eines gemeinsamen ersten Austauschkriteriums für eine zweite Anzahl von ersten Datenverarbeitungseinrichtungen ausgebildet ist. Somit kann der oben beschriebene wahlweise Austausch der Kryptographiedaten für eine Reihe von ersten Datenverarbeitungseinrichtungen gemeinsam vorgegeben bzw. initiiert werden.

Die vorliegende Erfindung lässt sich im Zusammenhang mit beliebigen Datenverarbeitungseinrichtungen für beliebige Anwendungen einsetzen, bei denen Kryptographiedaten zum Einsatz kommen und dementsprechend von Zeit zu Zeit ausgetauscht werden müssen. Besonders vorteilhaft ist der Einsatz im Frankiermaschinenumfeld, da dort wegen der abrechnungsrelevanten Vorgänge in der Frankiermaschine besonders hohe Sicherheitsanforderungen bestehen. Vorzugsweise ist die erste Datenverarbeitungseinrichtung daher eine Frankiermaschine. Zusätzlich oder alternativ ist die zweite Datenverarbeitungseinrichtung bevorzugt eine entfernte Datenzentrale.

Die vorliegende Erfindung betrifft weiterhin eine Datenverarbeitungseinrichtung für eine erfindungsgemäße Anordnung, die als erste Datenverarbeitungseinrichtung oder als zweite Datenverarbeitungseinrichtung ausgebildet ist, d. h. die Merkmale der oben beschriebenen ersten bzw. zweiten Datenverarbeitungseinrichtung aufweist. Hiermit lassen sich die oben im Zusammenhang mit der ersten bzw. zweiten Datenverarbeitungseinrichtung beschriebenen Varianten und Vorteile der erfindungsgemäßen Anordnung bzw. des erfindungsgemäßen Verfahrens in gleichem Maße realisieren, sodass diesbezüglich auf die obigen Ausführungen Bezug genommen wird.

Die vorliegende Erfindung betrifft weiterhin eine Datenverarbeitungseinrichtung für eine erfindungsgemäße Anordnung, die als dritte Datenverarbeitungseinrichtung ausgebildet ist, d. h. die Merkmale der oben beschriebenen dritten Datenverarbeitungseinrichtung aufweist. Hiermit lassen sich die oben im Zusammenhang mit der dritten Datenverarbeitungseinrichtung beschriebenen Varianten und Vorteile der erfindungsgemäßen Anordnung bzw. des erfindungsgemäßen Verfahrens in gleichem Maße realisieren, sodass diesbezüglich auf die obigen Ausführungen Bezug genommen wird.

Weitere bevorzugte Ausgestaltungen der Erfindung ergeben sich aus den Unteransprüchen bzw. der nachstehenden Beschreibung eines bevorzugten Ausführungsbeispiels, welche auf die beigefügten Zeichnungen Bezug nimmt. Es zeigen
- Figur 1: eine schematische Darstellung einer bevorzugten Ausführungsform der erfindungsgemäßen Anordnung zur Durchführung einer bevorzugten Ausführungsform des erfindungsgemäßen Verfahrens zum Austausch von einer ersten Datenverarbeitungseinrichtung zugeordneten ersten Kryptographiedaten;
- Figur 2: ein Ablaufdiagramm einer bevorzugten Ausführungsform des erfindungsgemäßen Verfahrens zum Austausch von einer ersten Datenverarbeitungseinrichtung zugeordneten ersten Kryptographiedaten, das mit der Anordnung aus Figur 1 durchgeführt wird;
- Figur 3: ein zeitliches Nutzungsdiagramm der einzelnen Generationen der ersten Kryptographiedaten der Anordnung aus Figur 1;
- Figur 4: ein Ablaufdiagramm einer bevorzugten Ausführungsform des erfindungsgemäßen Verfahrens zum Austausch von einer zweiten Datenverarbeitungseinrichtung zugeordneten zweiten Kryptographiedaten, das mit der Anordnung aus Figur 1 durchgeführt wird;
- Figur 5: ein zeitliches Nutzungsdiagramm der einzelnen Generationen der zweiten Kryptographiedaten der Anordnung aus Figur 1;
- Figur 6: ein zeitliches Nutzungsdiagramm der einzelnen Generationen der ersten Kryptographiedaten einer weiteren bevorzugten Variante der Anordnung aus Figur 1.

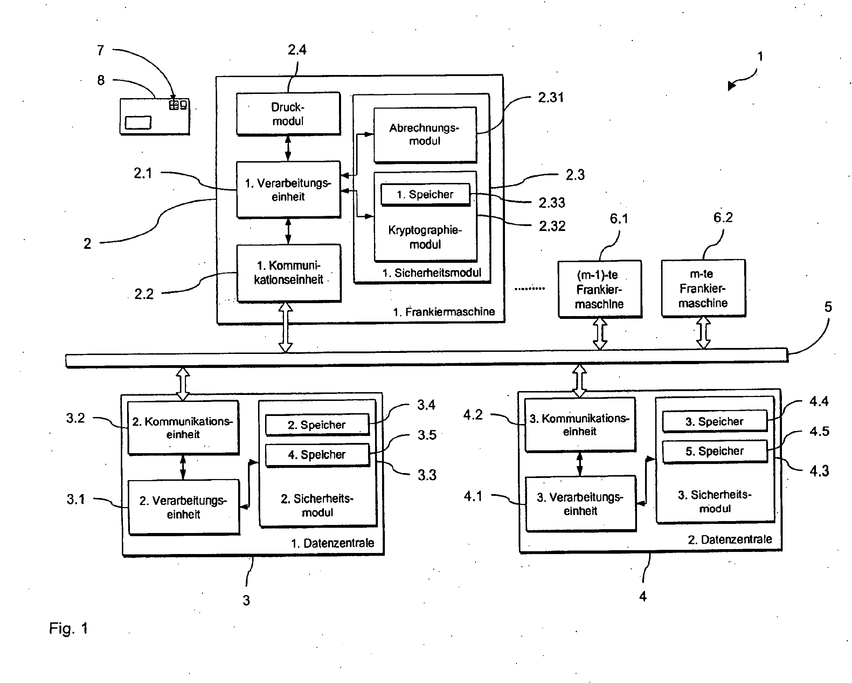

Figur 1 zeigt eine schematische Darstellung einer bevorzugten Ausführungsform der erfindungsgemäßen Anordnung 1 zur Durchführung einer bevorzugten Ausführungsform des erfindungsgemäßen Verfahrens zum Austausch von einer ersten Datenverarbeitungseinrichtung 2 zugeordneten ersten Kryptographiedaten.

Die Anordnung 1 umfasst eine erste Datenverarbeitungseinrichtung in Form einer ersten Frankiermaschine 2, eine zweite Datenverarbeitungseinrichtung in Form einer ersten Datenzentrale 3 des Herstellers der Frankiermaschine 2 und eine dritte Datenverarbeitungseinrichtung in Form einer zweiten Datenzentrale 4 einer kryptographischen Zertifizierungsinstanz, die jeweils mit einem Kommunikationsnetz 5 verbunden werden können. Weitere Frankiermaschinen 6.1, 6.2, die in Aufbau und Funktion der Frankiermaschine 2 gleichen, sind ebenfalls mit der Kommunikationsnetz 6 verbindbar. Insgesamt sind im vorleigenden Beispiel m Frankiermaschinen vorgesehen.

Die Frankiermaschine 2 weist eine erste Verarbeitungseinheit 2.1 und eine damit verbundene erste Kommunikationseinheit 2.2 in Form eines Modems auf. Weiterhin weist die Frankiermaschine 2 ein mit der ersten Verarbeitungseinheit 2.1 verbundenes erstes Sicherheitsmodul 2.3 auf. Schließlich weist die Frankiermaschine 2 eine mit der ersten Verarbeitungseinheit 2.1 verbundene und von dieser angesteuerte Druckeinrichtung in Form eines ersten Druckmoduls 2.4 auf.

Das erste Sicherheitsmodul 2.3 umfasst ein Abrechnungsmodul 2.31 und ein Kryptographiemodul 2.32 mit einem ersten Speicher 2.33. Das Abrechnungsmodul 2.31 dient dabei zur Abrechnung von Frankierabdrucken 7, die von dem Druckmodul 2.4 auf Poststücken 8 abgedruckt werden. Sobald die für den jeweiligen Frankierabdruck 7 erforderlichen Daten generiert wurden, erfolgt in dem Abrechnungsmodul 2.31 die Abrechnung hierfür. Dazu werden in dem Abrechnungsmodul 2.31 enthaltene Register in hinlänglich bekannter Weise um Werte erhöht (so genanntes aufsteigendes Register) bzw. erniedrigt (so genanntes absteigendes Register), die dem abgedruckten Portowert des Frankierabdrucks 7 entsprechen.

Um den Frankierabdruck 7 gegen Fälschungen abzusichern, wird in den Frankierabdruck 7 wenigstens eine Sicherungsinformation, beispielsweise eine Kryptozahl oder dergleichen, integriert. Diese Sicherungsinformation wird in dem Kryptographiemodul 2.32 unter Verwendung eines in dem ersten Speicher 2.33 abgelegten kryptographischen Algorithmus aus postalischen Informationen generiert, die dem jeweiligen Poststück 8 zugeordnet sind. Zum Generieren der Sicherungsinformation greift das Kryptographiemodul 2.32 unter anderem auf die in dem ersten Speicher 2.33 abgelegten ersten Kryptographiedaten in Form eines ersten kryptographischen Schlüssels K1 zu.

Die erste Datenzentrale 3, die im vorliegenden Beispiel von dem Hersteller der Frankiermaschine 2 betrieben wird, weist eine zweite Verarbeitungseinheit 3.1 und eine damit verbundene zweite Kommunikationseinheit 3.2 in Form einer Modembank auf. Weiterhin weist die erste Datenzentrale 3 ein mit der zweiten Verarbeitungseinheit 3.1 verbundenes zweites Sicherheitsmodul 3.3 auf, das eine zweiten Speicher 3.4 und einen dritten Speicher 3.5 umfasst.

Die Frankiermaschine 2 kann über das Kommunikationsnetz 5 bestimmte Dienste, wie beispielsweise das Nachladen von Porto etc., von der ersten Datenzentrale 3 anfordern bzw. abrufen. Hierzu baut sie über ihre erste Kommunikationseinheit 2.2, das Kommunikationsnetz 5 und die zweite Kommunikationseinheit 3.2 der ersten Datenzentrale 3 einen Kommunikationskanal mit der ersten Datenzentrale 3 auf. Im Rahmen einer solchen Kommunikation wird, wie im Folgenden noch näher erläutert wird, von Zeit zu Zeit der Austausch der in dem ersten Speicher 2.33 abgelegten bisherigen ersten Kryptographiedaten initiiert. Dieser Austausch geschieht, wie eingangs bereits erläutert wurde, zu dem Zweck, die Wahrscheinlichkeit einer Kompromittierung des mit Verwendung der ersten Kryptographiedaten implementierten Sicherheitsmechanismus zu reduzieren.

Die ersten Kryptographiedaten der Frankiermaschinen 2, 6.1 und 6.2 sind in einer kryptographischen Hierarchie eingebettet. Hierbei besteht eine kryptographische Bindung zu übergeordneten zweiten Kryptographiedaten der ersten Datenzentrale 3. Diese zweiten Kryptographiedaten, z. B. ein zweiter kryptographischer Schlüssel K2, sind in dem zweiten Speicher 3.4 des zweiten Sicherheitsmoduls 3.3 der ersten Datenzentrale 3 gespeichert. Die kryptographische Bindung wird unter anderem dadurch erzeugt, dass die erste Datenzentrale 3 in hinlänglich bekannter Weise unter Verwendung des kryptographischen Schlüssels K2 über dem ersten kryptographischen Schlüssel K1 ein erstes kryptographisches Zertifikat KC1 erzeugt, das dann unter anderem in dem ersten Speicher 2.33 abgelegt wird.

Die zweiten Kryptographiedaten werden ebenfalls zur Implementierung kryptographischer Sicherheitsmechanismen genutzt. Um auch für diese Sicherheitsmechanismen die Wahrscheinlichkeit einer Kompromittierung zu reduzieren, werden die zweiten Kryptographiedaten, wie im Folgenden noch näher erläutert wird, ebenfalls von Zeit zu Zeit ausgetauscht. Dieser Austausch wird im Rahmen einer Kommunikation der ersten Datenzentrale 3 mit der zweiten Datenzentrale 4 initiiert.

Die zweite Datenzentrale 4, die im vorliegenden Beispiel von einer Zertifizierungsinstanz CA betrieben wird, weist eine dritte Verarbeitungseinheit 4.1 und eine damit verbundene dritte Kommunikationseinheit 4.2 in Form einer Modembank auf. Weiterhin weist die zweite Datenzentrale 4 ein mit der dritten Verarbeitungseinheit 4.1 verbundenes drittes Sicherheitsmodul 4.3 auf. Die erste Datenzentrale 3 baut über ihre zweite Kommunikationseinheit 3.2, das Kommunikationsnetz 6 und die dritte Kommunikationseinheit 4.2 der zweiten Datenzentrale 4 einen Kommunikationskanal mit der zweiten Datenzentrale 4 auf. Im Rahmen einer solchen Kommunikation wird Austausch dann der Austausch der zweiten Kryptographiedaten initiiert.

Die zweiten Kryptographiedaten der ersten Datenzentrale 3 sind ebenfalls in der kryptographischen Hierarchie eingebettet. Hierbei besteht eine kryptographische Bindung zu über-geordneten dritten Kryptographiedaten der zweiten Datenzentrale 4. Diese dritten Kryptographiedaten, z. B. ein dritter kryptographischer Schlüssel K3, sind in einem dritten Speicher 4.4 des dritten Sicherheitsmoduls 4.3 der zweiten Datenzentrale 4 gespeichert. Diese kryptographische Bindung wird unter anderem dadurch erzeugt, dass die zweite Datenzentrale 3 in hinlänglich bekannter Weise unter Verwendung des kryptographischen Schlüssels K3 über dem zweiten kryptographischen Schlüssel K2 ein zweites kryptographisches Zertifikat KC2 erzeugt, das dann unter anderem in dem zweiten Speicher 2.33 abgelegt wird.

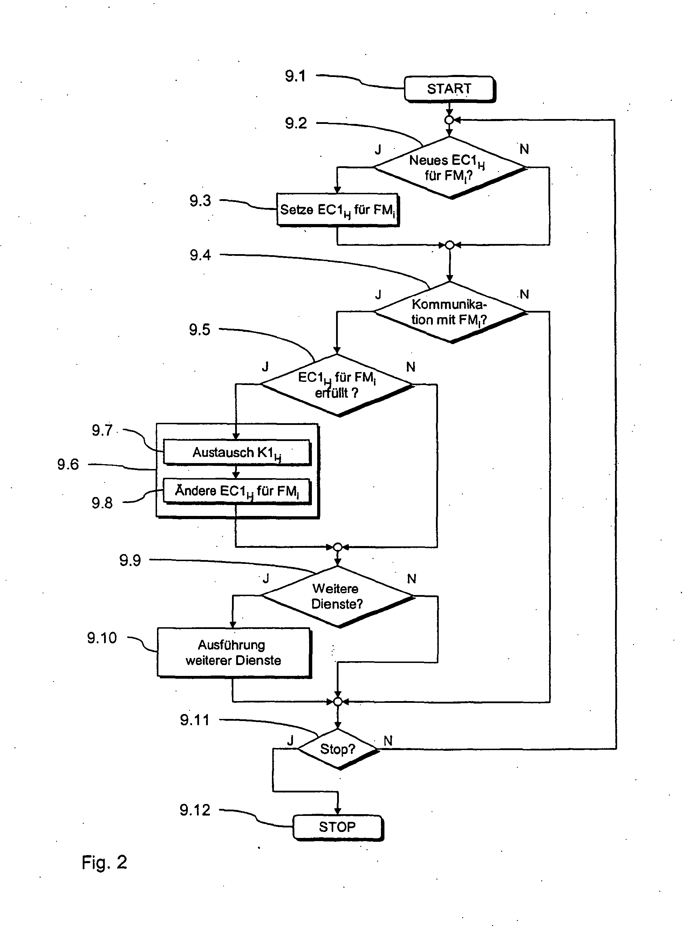

Im Folgenden wird unter Bezugnahme auf die Figuren 1 bis 3 der Ablauf einer bevorzugten Ausführungsform des erfindungsgemäßen Verfahrens zum Austausch der den ersten Datenverarbeitungseinrichtungen 2, 6.1, 6.2 zugeordneten ersten Kryptographiedaten beschrieben.

Zunächst wird der Verfahrensablauf in einem Schritt 9.1 gestartet. In einem Schritt 9.2 überprüft die zweite Verarbeitungseinheit 3.1, ob für eine Frankiermaschine FMᵢ (mit i=1...m) der m Frankiermaschinen 2 bis 6.2 ein neues erstes Austauschkriterium EC1ᵢ₋ⱼ vorzugeben ist.

Dieses von der ersten Datenzentrale 3 überwachte erste Austauschkriterium EC1ᵢ₋ⱼ bestimmt, ob und wann die ersten Kryptographiedaten, also der erste Schlüssel K1ᵢ₋ⱼ, der betreffenden Frankiermaschine FMᵢ auszutauschen ist oder nicht. Bei dem ersten Austauschkriterium kann es sich um ein beliebig von der ersten Datenzentrale 3 vorgebbares Kriterium handeln. So kann es sich beispielsweise um ein rein zeitliches Kriterium handeln, das einen Zeitpunkt T_{EC1i-j} vorgibt, ab dem die ersten Kryptographiedaten K1ᵢ₋ⱼ der j-ten Generation der betreffenden i-ten Frankiermaschine FMᵢ auszutauschen sind. Ebenso kann es sich um ein eingangs bereits beschriebenes nutzungsabhängiges Kriterium handeln, bei dessen Erfüllung der Austausch der ersten Kryptographiedaten erfolgt.

Weiterhin kann das erste Austauschkriterium EC1ᵢ₋ⱼ ein kombiniertes Kriterium sein, beispielsweise ein kombiniertes zeitliches und nutzungsabhängiges Kriterium sein. So kann es festlegen, dass der Austausch nach Erreichen eines bestimmten Nutzungsumfangs, spätestens aber nach einem bestimmten vorgegebenen Austauschzeitpunkt erfolgt. Dieser Austauschzeitpunkt kann beispielsweise in Abhängigkeit von dem für die aktuell im ersten Speicher vorhandenen bisherigen ersten Kryptographiedaten K1ᵢ₋ⱼ vorgegebenen Endzeitpunkt der Gültigkeitsdauer T_{VE1i-j} gewählt sein. Insbesondere kann er diesem entsprechen.

Soll ein neues erstes Austauschkriterium EC1ᵢ₋ⱼ für die i-te Frankiermaschine FMᵢ vorgegeben werden, erfolgt dies in einem Schritt 9.3 durch das zweite Sicherheitsmodul 3.3, welches das neue erste Austauschkriterium EC1ᵢ₋ⱼ in dem vierten Speicher 3.5 speichert. Es versteht sich jedoch, dass bei anderen Varianten der Erfindung auch vorgesehen sein kann, dass das neue erste Austauschkriterium EC1ᵢ₋ⱼ durch eine beliebige geeignete andere Instanz als die erste Datenzentrale 3 vorgegeben werden kann.

In einem Schritt 9.4 wird dann überprüft, ob über das Kommunikationsnetz 5 eine Kommunikationsverbindung mit einer Frankiermaschine FMᵢ vorliegt. Ist dies nicht der Fall, wird an dieser Stelle ― falls der Verfahrensablauf nicht beendet werden soll ― zurück zu Schritt 9.2 gesprungen.

Liegt jedoch beispielsweise eine Kommunikationsverbindung mit der i-ten Frankiermaschine FMᵢ vor, überprüft die zweite Verarbeitungseinheit unter Zugriff auf den zweiten Speicher 3.4 in einem Schritt 9.5, ob das erste Austauschkriterium EC1ᵢ₋ⱼ für die aktuelle Generation j der im ersten Speicher 2.33 vorhandenen bisherigen ersten Kryptographiedaten K1ᵢ₋ⱼ für diese Frankiermaschine FMᵢ erfüllt ist.

Ist dies der Fall, initiiert die erste Datenzentrale 3 einen ersten Austauschschritt 9.6. In diesem erfolgt zunächst in einem Schritt 9.7 der Austausch der im ersten Speicher der Frankiermaschine FMᵢ vorhandenen bisherigen ersten Kryptographiedaten K1ᵢ₋ⱼ der j-ten Generation. Diese werden durch neue erste Kryptographiedaten K1ᵢ₋₍ⱼ₊₁₎ der (j+1)-ten Generation ersetzt. Die im ersten Speicher 2.33 der Frankiermaschine FMᵢ vorhandenen bisherigen ersten Kryptographiedaten K1ᵢ₋ⱼ der j-ten Generation werden dabei mit den neuen ersten Kryptographiedaten K1ᵢ₋₍ⱼ₊₁₎ der (j+1)-ten Generation überschrieben, sodass diese dann vom Zeitpunkt der Ersetzung an durch die Frankiermaschine FMᵢ verwendet werden. Es versteht sich jedoch, dass bei anderen Varianten der Erfindung auch vorgesehen sein kann, dass die einzelnen Generationen der ersten Kryptographiedaten auch zumindest für eine bestimmte Zeit nebeneinander in dem ersten Speicher gespeichert sind. Beispielweise können die alten ersten Kryptographiedaten solange gespeichert bleiben, bis ein für sie vorgegebenes erstes Verfallskriterium erfüllt ist, mit anderen Worten z. B. ihr Gültigkeitsende erreicht ist. Dabei ist dann bevorzugt allerdings nur die jeweils neueste Generation der ersten Kryptographiedaten durch geeignete Mittel aktiviert.

Der Austausch der bisherigen ersten Kryptographiedaten K1ᵢ₋ⱼ der j-ten Generation durch die neuen ersten Kryptographiedaten K1ᵢ₋₍ⱼ₊₁₎ der (j+1)-ten Generation kann auf beliebige geeignete Weise erfolgen. So können die neuen erste Kryptographiedaten K1ᵢ₋₍ⱼ₊₁₎ einfach durch die erste Datenzentrale 3 vorgegeben werden. Dies kann beispielsweise der Fall sein, wenn in der Frankiermaschine FMᵢ ein extern vorgegebener geheimer Schlüssel auszutauschen ist.

Wird jedoch beispielsweise ein asymmetrisches Schlüsselpaar ausgetauscht, so kann dieses zunächst durch die Frankiermaschine generiert werden, der öffentliche Schlüssel dann durch die erste Datenzentrale kryptographisch zertifiziert werden und das asymmetrische Schlüsselpaar dann zusammen mit dem von der ersten Datenzentrale erhaltenen gültigen kryptographischen Zertifikat in dem ersten Speicher gespeichert werden. Das kryptographische Zertifikat stellt dabei die kryptographische Bindung zwischen dem asymmetrischen Schlüsselpaar, also den ersten Kryptographiedaten, und den zweiten Kryptographiedaten der ersten Datenzentrale dar, unter deren Verwendung das kryptographische Zertifikat erstellt wurde. Weiterhin versteht es sich, dass auch beliebige andere geeignete Austauschverfahren bzw. -abläufe realisiert werden können.

In beiden Fällen kann dabei ein nutzungsabhängiges, d. h. nicht-zeitliches Generierungskriterium für die vorgegeben sein. Überschreitet die Nutzung der bisherigen ersten Kryptographiedaten K1ᵢ₋ⱼ der j-ten Generation eine bestimmte erste Nutzungsschwelle, so werden neue erste Kryptographiedaten K1ᵢ₋₍ⱼ₊₁₎ der (j+1)-ten Generation generiert, die einen gegenüber den bisherigen ersten Kryptographiedaten K1ᵢ₋ⱼ der j-ten Generation erhöhten Umfang haben. Dies kann bei kryptographischen Schlüsseln beispielsweise eine erhöhte Schlüssellänge sein. Ebenso kann natürlich auch eine relative Reduzierung des Umfangs neue erste Kryptographiedaten K1ᵢ₋₍ⱼ₊₁₎ der (j+1)-ten Generation vorgesehen sein, wenn die Nutzung der bisherigen ersten Kryptographiedaten K1ᵢ₋ⱼ der j-ten Generation eine bestimmte zweite Nutzungsschwelle unterschreitet. Weiterhin können natürlich auch mehrere Nutzungsschwellen mit zugeordnetem unterschiedlichem Umfang der neuen ersten Kryptographiedaten K1ᵢ₋₍ⱼ₊₁₎ der (j+1)-ten Generation vorgesehen sein. Zusätzlich oder alternativ kann der Überschreitung bzw. Unterschreitung der jeweiligen Nutzungsschwelle die Verwendung unterschiedlicher Generierungsalgorithmen für die neuen ersten Kryptographiedaten K1ᵢ₋₍ⱼ₊₁₎ der (j+1)-ten Generation zugeordnet sein. Die Generierung der neuen ersten Kryptographiedaten kann sowohl in der Frankiermaschine 2 als auch in der ersten Datenzentrale 3 erfolgen.

Nach erfolgreichem Austausch der ersten Kryptographiedaten in dem Schritt 9.7 wird in einem Schritt 9.8 dann in der ersten Datenzentrale 3 das in dem vierten Speicher gespeicherte derzeitige erste Austauschkriterium EC1ᵢ₋ⱼ der j-ten Generation verändert. Hierzu wird unmittelbar ein neues erstes Austauschkriterium der (j+1)-ten Generation vorgegeben. Ebenso kann aber auch vorgesehen sein, dass zunächst kein gültiges erstes Austauschkriterium vorgegeben wird und dieses erst zu einem späteren Zeitpunkt, beispielsweise in Schritt 9.2 wieder gesetzt wird. In diesem Fall ist mit anderen Worten vorgegeben, dass für die betreffende Frankiermaschine zunächst kein Austausch der ersten Kryptographiedaten vorgesehen ist. Die betreffende Frankiermaschine ist mit anderen Worten dann als zunächst nicht für den Austausch der ersten Kryptographiedaten vorgesehen markiert.

Es versteht sich jedoch, dass bei anderen Varianten der Erfindung auch vorgesehen sein kann, dass diese Änderung des ersten Austauschkriteriums auch unterbleiben kann. Dies kann insbesondere dann der Fall sein, wenn das erste Austauschkriterium ein nutzungsabhängiges Kriterium oder der Ablauf eines bestimmten Zeitintervalls seit dem letzten Austausch ist. Ein solches erstes Austauschkriterium kann gegebenenfalls unverändert belassen werden.

Ist die Änderung des ersten Austauschkriteriums erfolgt, überprüft die zweite Verarbeitungseinheit 3.1 in einem Schritt 9.9, ob von der Frankiermaschine FMᵢ weitere Dienste angefordert wurden. Bei diesen Diensten kann es sich beispielsweise um das Herunterladen von Porto in das Abrechnungsmodul 2.31 oder beliebige andere Dienste handeln.

Wurden von der Frankiermaschine FMᵢ weitere Dienste angefordert, werden diese in einem Schritt 9.10 ausgeführt, bevor in einem Schritt 9.11 überprüft wird, ob der Verfahrensablauf beendet werden soll. Ist dies der Fall, wird der Verfahrensablauf in einem Schritt 9.12 beendet. Andernfalls wird zurück zu Schritt 9.2 gesprungen.

Es versteht sich hierbei, dass der Austausch der ersten Kryptographiedaten auch dann erfolgt, wenn dieser Dienst nicht von der Frankiermaschine FMᵢ angefordert wurde, sondern mit der Kommunikation lediglich andere Dienste abgerufen werden sollten. Hierdurch ist es möglich, den Austausch der ersten Kryptographiedaten zentral und ohne Zutun der Frankiermaschine FMᵢ von der ersten Datenzentrale aus zu steuern.

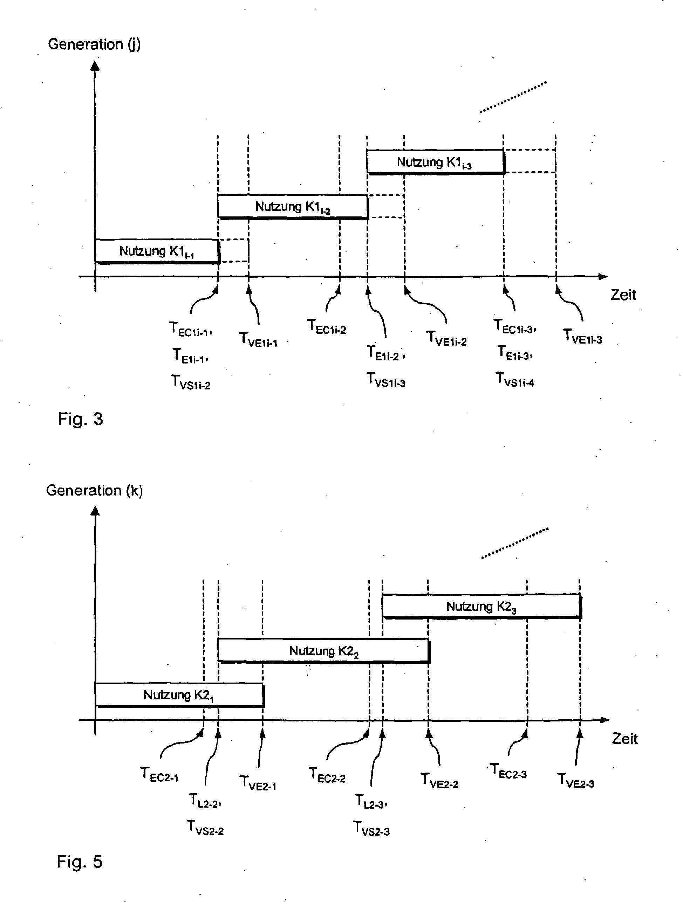

Wie Figur 3 zu entnehmen ist, erfolgt im vorliegenden Beispiel keine zeitliche Überlappung der Nutzung der unterschiedlichen Generationen j der ersten Kryptographiedaten K1ᵢ₋ⱼ der i-ten Frankiermaschine FMᵢ. So wird die erste Generation der ersten Kryptographiedaten K1ᵢ₋₁ zu einem Austauschzeitpunkt T_{E1i-1} durch neue erste Kryptographiedaten K1ᵢ₋₂ der zweiten Generation ausgetauscht. Zu diesem Zeitpunkt T_{E1i-1} endet die Nutzung der ersten Generation der ersten Kryptographiedaten K1ᵢ₋₁ und es beginnt die Nutzung der zweiten Generation der ersten Kryptographiedaten K1ᵢ₋₁. Deren Gültigkeitsbeginn T_{VS1i-2} fällt im vorliegenden Beispiel im Wesentlichen mit dem Austauschzeitpunkt T_{E1i-1} zusammen, um keine Nutzungslücken oder -überlappungen entstehen zu lassen.

Der Austauschzeitpunkt T_{E1i-1} fällt in diesem Beispiel weiterhin im Wesentlichen auch mit dem Zeitpunkt T_{EC1i-1} der Feststellung der Erfüllung des ersten Austauschkriteriums EC1ᵢ₋₁ zusammen. Dies liegt hier daran, dass das erste Austauschkriterium EC1ᵢ₋₁ der ersten Generation ein nutzungsabhängiges Kriterium ist, das von der Nutzung der ersten Kryptographiedaten K1ᵢ₋₁ der ersten Generation abhängt. Diese Nutzung wird der ersten Datenzentrale 3 im Rahmen der Kommunikation mit der i-ten Frankiermaschine mitgeteilt. Stellt die erste Datenzentrale 3 dabei fest, dass das erste Austauschkriterium EC1ᵢ₋₁ der ersten Generation erfüllt ist, erfolgt sofort der Austausch der ersten Kryptographiedaten.

Wie Figur 3 weiterhin zu entnehmen ist, wird die zweite Generation der ersten Kryptographiedaten K1ᵢ₋₂ zu einem Austauschzeitpunkt T_{E1i-2} durch neue erste Kryptographiedaten K1ᵢ₋₃ der dritten Generation ausgetauscht. Zu diesem Zeitpunkt T_{E1i-2} endet wiederum die Nutzung der zweiten Generation der ersten Kryptographiedaten K1ᵢ₋₂ und es beginnt die Nutzung der dritten Generation der ersten Kryptographiedaten K1ᵢ₋₃. Deren Gültigkeitsbeginn T_{VS1l-3} fällt im vorliegenden Beispiel wiederum im Wesentlichen mit dem Austauschzeitpunkt T_{E1i-2} zusammen, um keine Nutzungslücken oder-überlappungen entstehen zu lassen.

Der Austauschzeitpunkt T_{E1i-2} der ersten Kryptographiedaten K1ᵢ₋₂ der zweiten Generation liegt in diesem Beispiel nach dem Zeitpunkt T_{EC1i-2} der Erfüllung des ersten Austauschkriteriums EC1ᵢ₋₂ der zweiten Generation. Dies liegt hier daran, dass das erste Austauschkriterium EC1ᵢ₋₂ der zweiten Generation ein zeitliches Kriterium ist, das den Zeitpunkt T_{EC1i-2} definiert. Die Kommunikation mit der i-ten Frankiermaschine, im Rahmen derer der Austausch initiiert wird, erfolgt hier jedoch erst nach dem Zeitpunkt T_{EC1i-2} der Erfüllung des ersten Austauschkriteriums EC₁ᵢ₋₂ der zweiten Generation, sodass der Austauschzeitpunkt T_{E1i-2} später liegt als der Zeitpunkt T_{EC1i-2}.

Wie in Figur 3 angedeutet ist, setzt sich der Austausch der ersten Kryptographiedaten K1ᵢ₋ⱼ weiterer Generationen entsprechend fort. Dabei versteht es sich, dass erste Austauschkriterien beliebiger Art zum Einsatz kommen können.

In allen Fällen ist das erste Austauschkriterium EC1ᵢ₋ⱼ bevorzugt so gewählt, dass seine Erfüllung und der Austauschzeitpunkt T_{E1i-j} im Normalfall vor der Erfüllung eines der jeweiligen Generation der ersten Kryptographiedaten K1ᵢ₋ⱼ zugeordneten ersten Verfallskriteriums der ersten Kryptographiedaten K1ᵢ₋ⱼ liegt. Dieses erste Verfallskriterium ist im vorliegenden Beispiel erfüllt, wenn das Gültigkeitsende T_{VE1i-j} der aktuellen Generation j der ersten Kryptographiedaten K1ᵢ₋ⱼ erreicht ist. Diese Wahl des ersten Austauschkriteriums EC1ᵢ₋ⱼ dient dazu, sicherzustellen, dass keine Nutzungslücken der i-ten Frankiermaschine FMᵢ mangels gültiger ersten Kryptographiedaten auftreten.

Es versteht sich in diesem Zusammenhang jedoch, dass das erste Verfallskriterium auch kein zeitliches sondern ein nutzungsabhängiges Kriterium sein kann, das von der Nutzung der ersten Kryptographiedaten K1ᵢ₋₁ der ersten Generation abhängt. Ebenso kann es sich um ein kombiniertes zeit- und nutzungsabhängiges Kriterium handeln.

Es versteht sich in diesem Zusammenhang weiterhin, dass das erste Austauschkriterium EC1ᵢ₋ⱼ gemeinsam für mehrere Frankiermaschinen vorgegeben sein kann. So kann beispielsweise je nach Bauart der Frankiermaschine etc. ein erstes Austauschkriterium für eine erste Gruppe von Frankiermaschinen vorgegeben werden, die alle Frankiermaschinen einer bestimmten Bauart umfasst. Ebenso können natürlich auch beliebige andere Gruppen von Frankiermaschinen nach beliebigen Kriterien gebildet werden, denen dann gemeinsam ein erstes Austauschkriterium vorgegeben wird.

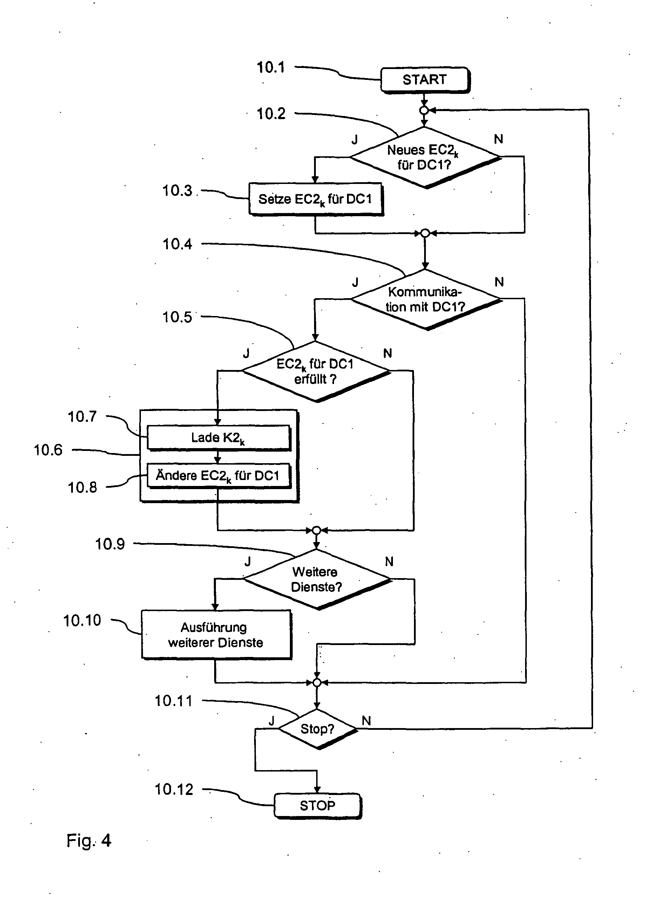

Im Folgenden wird unter Bezugnahme auf die Figuren 1, 4 und 5 der Ablauf einer bevorzugten Ausführungsform des erfindungsgemäßen Verfahrens zum Austausch der zweiten Kryptographiedaten der ersten Datenzentrale beschrieben.

Zunächst wird der Verfahrensablauf in einem Schritt 10.1 gestartet. In einem Schritt 10.2 überprüft die dritte Verarbeitungseinheit 4.1 der zweiten Datenzentrale 4, ob für die erste Datenzentrale (DC1) 3 ein neues zweites Austauschkriterium EC2 vorzugeben ist.

Dieses von der zweiten Datenzentrale 4 überwachte zweite Austauschkriterium EC2 bestimmt, ob und wann die zweiten Kryptographiedaten K2, also beispielsweise ein zweite Schlüssel, der ersten Datenzentrale 3 auszutauschen ist oder nicht. Bei dem zweiten Austauschkriterium kann es sich um ein beliebig von der zweiten Datenzentrale 3 vorgebbares Kriterium handeln. So kann es sich beispielsweise um ein rein zeitliches Kriterium handeln, das einen Zeitpunkt T_{EC1i-j} vorgibt, ab dem die zweiten Kryptographiedaten K2ₖ der k-ten Generation der ersten Datenzentrale 3 auszutauschen sind. Ebenso kann es sich um ein eingangs bereits beschriebenes nutzungsabhängiges Kriterium handeln, bei dessen Erfüllung der Austausch der zweiten Kryptographiedaten erfolgt.

Weiterhin kann das zweite Austauschkriterium EC2ₖ wiederum ein oben beschriebenes kombiniertes Kriterium sein. Der Austauschzeitpunkt kann wiederum in Abhängigkeit von dem für die aktuell im zweiten Speicher 2.2 vorhandenen bisherigen zweiten Kryptographiedaten K2ₖ vorgegebenen Endzeitpunkt der Gültigkeitsdauer T_{VE2k} gewählt sein. Insbesondere kann er diesem entsprechen.

Soll ein neues zweites Austauschkriterium EC2ₖ für die erste Datenzentrale 3 vorgegeben werden, erfolgt dies in einem Schritt 10.3 durch das dritte Sicherheitsmodul 4.3, welches das neue zweite Austauschkriterium EC2ₖ in dem fünften Speicher 4.5 speichert. Es versteht sich jedoch, dass bei anderen Varianten der Erfindung auch vorgesehen sein kann, dass das neue erste Austauschkriterium EC1ᵢ₋ⱼ durch eine beliebige geeignete andere Instanz als die zweite Datenzentrale 4 vorgegeben werden kann.

In einem Schritt 10.4 wird dann überprüft, ob über das Kommunikationsnetz 5 eine Kommunikationsverbindung mit der ersten Datenzentrale 3 vorliegt. Ist dies nicht der Fall, wird an dieser Stelle ― falls der Verfahrensablauf nicht beendet werden soll ― zurück zu Schritt 10.2 gesprungen.

Liegt jedoch beispielsweise eine Kommunikationsverbindung mit der ersten Datenzentrale 3 vor, wird in einem Schritt 10.5 überprüft, ob das zweite Austauschkriterium EC2ₖ für die aktuelle Generation k der im ersten Speicher vorhandenen bisherigen zweiten Kryptographiedaten K2k für die erste Datenzentrale 3 erfüllt ist.

Ist dies der Fall, initiiert die zweite Datenzentrale 4 einen Schritt 10.6. In diesem werden zunächst in einem Schritt 10.7 neue zweite Kryptographiedaten K2₍ₖ₊₁₎ der (k+1)-ten Generation in den zweiten Speicher 3.4 der ersten Datenzentrale 3 geladen. Diese werden von der ersten Datenzentrale 3 solange neben den vorhandenen bisherigen zweiten Kryptographiedaten K2ₖ der k-ten Generation verwendet, bis das Gültigkeitsende T_{VE2-k} der bisherigen zweiten Kryptographiedaten K2ₖ der k-ten Generation erreicht ist. Von diesem Gültigkeitsende T_{VE2-k} an werden dann zunächst nur noch die zweiten Kryptographiedaten K2₍ₖ₊₁₎ der (k+1)-ten Generation verwendet.

Das Laden neuen zweiten Kryptographiedaten K2₍ₖ₊₁₎ der (k+1)-ten Generation kann auf beliebige geeignete Weise erfolgen. So können die neuen zweiten Kryptographiedaten K2₍ₖ₊₁₎ einfach durch die zweite Datenzentrale 4 vorgegeben werden. Dies kann beispielsweise der Fall sein, wenn in der ersten Datenzentrale 3 ein extern vorgegebener geheimer Schlüssel auszutauschen ist.

Wird jedoch beispielsweise ein asymmetrisches Schlüsselpaar ausgetauscht, so kann dieses zunächst durch die erste Datenzentrale 3 generiert werden, der öffentliche Schlüssel dann durch die zweite Datenzentrale 4 kryptographisch zertifiziert werden und das asymmetrische Schlüsselpaar dann zusammen mit dem von der zweiten Datenzentrale 4 erhaltenen gültigen kryptographischen Zertifikat in dem zweiten Speicher gespeichert werden. Das kryptographische Zertifikat stellt dabei die kryptographische Bindung zwischen dem asymmetrischen Schlüsselpaar, also den zweiten Kryptographiedaten, und den dritten Kryptographiedaten der zweiten Datenzentrale 4 dar, unter deren Verwendung das kryptographische Zertifikat erstellt wurde. Weiterhin versteht es sich, dass auch beliebige andere geeignete Ladeverfahren bzw. -abläufe realisiert werden können.

Nach erfolgreichem Laden der neuen zweiten Kryptographiedaten wird in einem Schritt 10.8 dann in der ersten Datenzentrale 3 das in dem vierten Speicher gespeicherte derzeitige zweite Austauschkriterium EC2ₖ der k-ten Generation verändert. Hierzu wird unmittelbar ein neues zweites Austauschkriterium der (k+1)-ten Generation vorgegeben. Ebenso kann aber auch vorgesehen sein, dass zunächst kein gültiges zweites Austauschkriterium vorgegeben wird und dieses erst zu einem späteren Zeitpunkt, beispielsweise in Schritt 10.2 wieder gesetzt wird. In diesem Fall ist mit anderen Worten vorgegeben, dass zunächst kein Austausch der zweiten Kryptographiedaten vorgesehen ist.

Es versteht sich jedoch, dass bei anderen Varianten der Erfindung auch vorgesehen sein kann, dass diese Änderung des zweiten Austauschkriteriums auch unterbleiben kann. Dies kann insbesondere dann der Fall sein, wenn das zweite Austauschkriterium ein nutzungsabhängiges Kriterium oder der Ablauf eines bestimmten Zeitintervalls seit dem letzten Austausch ist.

Ist die Änderung des zweiten Austauschkriteriums erfolgt, überprüft die dritte Verarbeitungseinheit 4.1 in einem Schritt 10.10, ob von der ersten Datenzentrale 3 weitere Dienste angefordert wurden. Bei diesen Diensten kann es sich um beliebige Dienste handeln. Wurden von der ersten Datenzentrale 3 weitere Dienste angefordert, werden diese in einem Schritt 10.10 ausgeführt, bevor in einem Schritt 10.11 überprüft wird, ob der Verfahrensablauf beendet werden soll. Ist dies der Fall, wird der Verfahrensablauf in einem Schritt 10.12 beendet. Andernfalls wird zurück zu Schritt 10.2 gesprungen.

Es versteht sich hierbei wiederum, dass der Austausch der zweiten Kryptographiedaten auch dann erfolgt, wenn dieser Dienst nicht von der ersten Datenzentrale 3 angefordert wurde, sondern mit der Kommunikation lediglich andere Dienste von der zweiten Datenzentrale 4 abgerufen werden sollten. Hierdurch ist es möglich, auch den Austausch der zweiten Kryptographiedaten zentral und ohne Zutun der ersten Datenzentrale 3 durch die zweite Datenzentrale 4 zu steuern.

Wie Figur 5 zu entnehmen ist, erfolgt im vorliegenden Beispiel eine zeitliche Überlappung der Nutzung zweier aufeinanderfolgender Generationen k und k+1 der zweiten Kryptographiedaten K2ₖ der ersten Datenzentrale 3. So wird die zweite Generation der zweiten Kryptographiedaten K2₂ nach Erfüllung des zweiten Austauschkriteriums EC2₁ der ersten Generation der zweiten Kryptographiedaten K2₁ zu einem Ladezeitpunkt T_{L2-2} geladen. Zu diesem Ladezeitpunkt T_{L2-2} endet die Nutzung der ersten Generation der zweiten Kryptographiedaten K2₂ noch nicht. Gleichzeitig beginnt aber die Nutzung der zweiten Generation der zweiten Kryptographiedaten K2₂. Deren Gültigkeitsbeginn T_{VS2-2} fällt im vorliegenden Beispiel im Wesentlichen mit ihrem Ladezeitpunkt T_{L2-2} zusammen, um eine sofortige Nutzung zu ermöglichen. Es versteht sich jedoch, dass der Gültigkeitsbeginn T_{VS2-K} bei anderen Varianten der Erfindung auch nach dem Ladezeitpunkt T_{L2-k} liegen kann. Insbesondere kann der Gültigkeitsbeginn T_{VS2-K} durch die Erfüllung eines beliebigen anderen zweiten Gültigkeitskriteriums definiert sein.

Die Erfüllung des zweiten Gültigkeitskriteriums, also der Gültigkeitsbeginn T_{VS2-2} der zweiten Kryptographiedaten K2₂, stellt im Übrigen ein zeitliches Ereignis dar, welches im vorliegenden Beispiel die Vorgabe eines ersten Austauschkriteriums EC1ᵢ₋ⱼ für alle Frankiermaschinen FMᵢ bedingt. So muss sichergestellt werden, dass zwischen den neuen zweiten Kryptographiedaten K2ₖ der ersten Datenzentrale 3 und den ersten Kryptographiedaten K1ᵢ₋ⱼ der Frankiermaschinen FMᵢ weiterhin eine kryptographische Bindung besteht. Um dies zu erreichen, bedingt der Austausch der zweiten Kryptographiedaten K2ₖ der ersten Datenzentrale 3 einen Austausch der ersten Kryptographiedaten K1ᵢ₋ⱼ aller Frankiermaschinen FMᵢ. Der Gültigkeitsbeginn T_{VS2-2} stellt somit den Zeitpunkt T_{EC1i-j} der Erfüllung eines ersten Austauschkriteriums EC1ᵢ₋ⱼdar. Im vorliegenden ist dies der Zeitpunkt T_{EC1i-2} der Erfüllung des ersten Austauschkriteriums EC1ᵢ₋₂ der zweiten Generation der ersten Kryptographiedaten K1ᵢ₋₂ für alle Frankiermaschinen FMᵢ.

Der Ladezeitpunkt T_{L2-k} liegt wie erwähnt nach dem Zeitpunkt T_{EC2-1} der Erfüllung des zweiten Austauschkriteriums EC2₁. Dies ist dadurch bedingt, dass das zweite Austauschkriterium EC2₁ ein zeitliches Kriterium ist, das den Zeitpunkt T_{EC2-1} definiert. Die Kommunikation mit der ersten Datenzentrale 3, im Rahmen derer der Austausch und damit das Laden initiiert wird, erfolgt hier jedoch erst nach dem Zeitpunkt T_{EC2-1} der Erfüllung des zweiten Austauschkriteriums EC2₁ der ersten Generation, sodass der Ladezeitpunkt T_{L2-k} später liegt als der Zeitpunkt T_{EC2-1}.

Ist das Gültigkeitsende T_{VE2-1} der ersten Generation der zweiten Kryptographiedaten K2₁ erreicht, werden die zweiten Kryptographiedaten K2₁ aus dem zweiten Speicher 3.4 gelöscht und nur noch die zweiten Kryptographiedaten K2₂ der zweiten Generation verwendet, womit der Austausch der zweiten Kryptographiedaten K2₁ der ersten Generation abgeschlossen ist.

Wie Figur 5 weiterhin zu entnehmen ist, wird die zweite Generation der zweiten Kryptographiedaten K2₂ in analoger Weise ausgetauscht. Hierzu werden zunächst zu einem Ladezeitpunkt T_{L2-3} neue zweite Kryptographiedaten K2₃ der dritten Generation in den zweiten Speicher 3.4 geladen. Zu einem Gültigkeitsende T_{VE2-2} der zweiten Generation der zweiten Kryptographiedaten K2₂ werden die zweiten Kryptographiedaten K2₂ aus dem zweiten Speicher 3.4 gelöscht und nur noch die zweiten Kryptographiedaten K2₃ der dritten Generation verwendet, womit der Austausch der zweiten Kryptographiedaten K2₂ der zweiten Generation abgeschlossen ist.

Wie in Figur 5 angedeutet ist, setzt sich der Austausch der zweiten Kryptographiedaten K2ₖ weiterer Generationen entsprechend fort. Dabei versteht es sich, dass zweite Austauschkriterien beliebiger Art zum Einsatz kommen können. Insbesondere versteht es sich hierbei, dass das zweite Austauschkriterium EC2ₖ bei anderen Varianten der Erfindung auch wiederum ein nutzungsabhängiges Kriterium sein kann, wie dies oben im Zusammenhang mit dem ersten Austauschkriterium EC1ᵢ₋ⱼ beschrieben wurde, sodass diesbezüglich lediglich auf die obigen Ausführungen Bezug genommen wird..

In allen Fällen ist das zweite Austauschkriterium EC2ₖ bevorzugt so gewählt, dass der Ladezeitpunkt T_{L2-(k+1)} der nachfolgenden Generation im Normalfall vor dem Gültigkeitsende T_{VE2k} der aktuellen Generation k der zweiten Kryptographiedaten K2ₖ liegt, um sicherzustellen, dass keine Nutzungslücken der ersten Datenzentrale mangels gültiger zweiter Kryptographiedaten auftreten.

Es versteht sich in diesem Zusammenhang, dass das analog zu dem ersten Austauschkriterium EC1ᵢ₋ⱼ das zweite Austauschkriterium EC2ₖ gemeinsam für mehrere erste Datenzentralen vorgegeben sein kann.

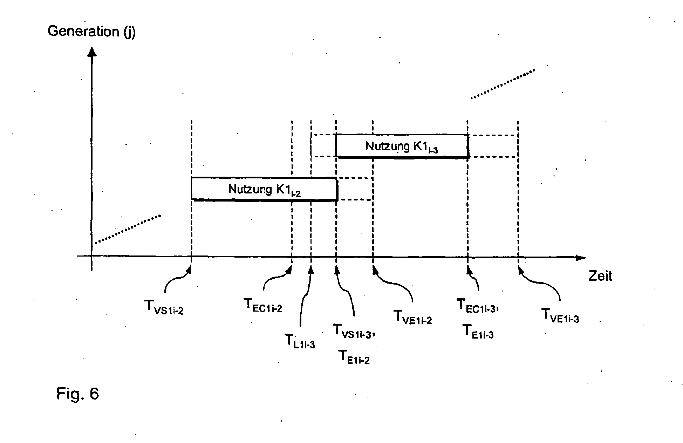

Figur 6 zeigt ein zeitliches Nutzungsdiagramm der einzelnen Generationen der ersten Kryptographiedaten einer weiteren bevorzugten Variante der Anordnung aus Figur 1. Diese Variante unterscheidet sich in Aufbau und Funktionsweise grundsätzlich nicht von derjenigen aus Figur 1, sodass hier lediglich auf die Unterschiede eingegangen werden soll.

Wie Figur 6 zu entnehmen ist, wird die dritte Generation der ersten Kryptographiedaten K1ᵢ₋₃ zu einem Ladezeitpunkt T_{L1i-3} in den ersten Speicher 2.33 geladen. Dieser Ladezeitpunkt T_{L1i-3} liegt vor dem Gültigkeitsbeginn T_{VS1i-3} dieser ersten Kryptographiedaten K1ᵢ₋₃ der dritten Generation. Dieser Gültigkeitsbeginn T_{VS1i-3} wird den neuen ersten Kryptographiedaten K1ᵢ₋₃der dritten Generation durch die erste Datenzentrale 3 als neues erstes Gültigkeitskriterium vorgegeben und mit den ersten Kryptographiedaten K1ᵢ₋₃ in dem ersten Speicher 2.33 gespeichert.

Erst mit Erfüllung des neuen ersten Gültigkeitskriteriums werden die ersten Kryptographiedaten K1ᵢ₋₂ der zweiten Generation zu dem Austauschzeitpunkt T_{E1i-2}, der dem Gültigkeitsbeginn T_{VS1i-3} entspricht, durch die neuen ersten Kryptographiedaten K1ᵢ₋₃ der dritten Generation ausgetauscht. Bis zu diesem Zeitpunkt sind die ersten Kryptographiedaten K1ᵢ₋₂ der zweiten Generation und die ersten Kryptographiedaten K1ᵢ₋₃ der dritten Generation nebeneinander dem ersten Speicher 2.33 gespeichert.

Der Austauschzeitpunkt T_{E1i-2} der ersten Kryptographiedaten K1ᵢ₋₂ der zweiten Generation liegt auch hier vor dem Gültigkeitsende T_{VE1i-2} dieser ersten Kryptographiedaten K1ᵢ₋₂ der zweiten Generation, mithin also vor der Erfüllung des ersten Verfallskriteriums der ersten Kryptographiedaten K1ᵢ₋₂ der zweiten Generation. Hiermit ist sichergestellt, dass es zu keinen Nutzungslücken der betreffenden Frankiermaschine FMᵢ kommt.

Die vorliegende Erfindung wurde vorstehend hauptsächlich anhand von Beispielen beschrieben, bei denen die jeweiligen Kryptographiedaten von kryptographischen Schlüsseln gebildet waren. Es versteht sich, dass die jeweiligen Kryptographiedaten bei anderen Varianten der Erfindung auch anderweitig ausgebildet sein können. Insbesondere kann es sich bei ihnen auch um ein oder mehrere kryptographische Zertifikate etc. handeln.

## Patentansprüche

1. Verfahren zum Austausch von einer ersten Datenverarbeitungseinrichtung (2, 6.1, 6.2) zugeordneten ersten Kryptographiedaten, insbesondere eines ersten kryptographischen Schlüssels oder eines ersten kryptographischen Zertifikats, bei dem
- die in einem ersten Speicher (2.33) der ersten Datenverarbeitungseinrichtung (2, 6.1, 6.2) gespeicherten bisherigen ersten Kryptographiedaten, denen ein bisheriges erstes Verfallskriterium zugeordnet ist, in einem ersten Austauschschritt (9.6) durch neue erste Kryptographiedaten ausgetauscht werden, wobei
- in dem ersten Austauschschritt (9.6) eine Kommunikation mit einer entfernten zweiten Datenverarbeitungseinrichtung (3) erfolgt,
- der erste Austauschschritt (9.6) spätestens nach Erfüllung des bisherigen ersten Verfallskriteriums durchgeführt wird und
- die Erfüllung eines den bisherigen ersten Kryptographiedaten und/oder der ersten Datenverarbeitungseinrichtung (2, 6.1, 6.2) zugeordneten ersten Austauschkriteriums in der zweiten Datenverarbeitungseinrichtung (3) überwacht wird und die zweite Datenverarbeitungseinrichtung (3) den ersten Austauschschritt (9.6) nach Erfüllung des ersten Austauschkriteriums initiiert,
**dadurch gekennzeichnet, dass**
- die neuen ersten Kryptographiedaten in dem ersten Austauschschritt (9.6) generiert werden, wobei die Generierung der neuen ersten Kryptographiedaten in Abhängigkeit von der Erfüllung wenigstens eines Generierungskriteriums erfolgt.

2. Verfahren nach Anspruch 1, **dadurch gekennzeichnet, dass** das erste Austauschkriterium durch die zweite Datenverarbeitungseinrichtung (3) vorgegeben wird.

3. Verfahren nach Anspruch 1 oder 2, **dadurch gekennzeichnet, dass** die Erfüllung des ersten Austauschkriteriums vor der Erfüllung des bisherigen ersten Verfallskriteriums liegt.

4. Verfahren nach einem der vorhergehenden Ansprüche, **dadurch gekennzeichnet, dass** das erste Verfallskriterium und/oder das erste Austauschkriterium ein zeitliches Kriterium ist.

5. Verfahren nach einem der Ansprüche 1 bis 3, **dadurch gekennzeichnet, dass** das erste Verfallskriterium und/oder das erste Austauschkriterium ein nicht-zeitliches Kriterium ist, insbesondere ein von der Nutzung der ersten Datenverarbeitungseinrichtung (2, 6.1, 6.2) oder von den aktuellen ersten Kryptographiedaten abhängiges Kriterium ist.

6. Verfahren nach einem der vorhergehenden Ansprüche, **dadurch gekennzeichnet, dass**
- den neuen ersten Kryptographiedaten ein neues erstes Gültigkeitskriterium zugeordnet wird, wobei die Erfüllung des neuen ersten Gültigkeitskriteriums den Beginn der Gültigkeit der neuen ersten Kryptographiedaten definiert, und
- die Erfüllung des neuen ersten Gültigkeitskriteriums spätestens mit der Erfüllung des bisherigen ersten Verfallskriteriums eintritt, insbesondere vor der Erfüllung des bisherigen ersten Verfallskriteriums eintritt.

7. Verfahren nach Anspruch 6, **dadurch gekennzeichnet, dass** die neuen ersten Kryptographiedaten und die bisherigen ersten Kryptographiedaten zumindest bis zur Erfüllung des bisherigen ersten Verfallskriteriums beide in dem ersten Speicher gespeichert sind.

8. Verfahren nach einem der vorhergehenden Ansprüche, **dadurch gekennzeichnet, dass** das erste Austauschkriterium bei Abschluss des ersten Austauschschritts modifiziert wird.

9. Verfahren nach einem der vorhergehenden Ansprüche, **dadurch gekennzeichnet, dass** zum Austausch von der zweiten Datenverarbeitungseinrichtung (3) zugeordneten zweiten Kryptographiedaten, insbesondere eines zweiten kryptographischen Schlüssels oder eines zweiten kryptographischen Zertifikats,
- die in einem zweiten Speicher (3.4) der zweiten Datenverarbeitungseinrichtung (3) gespeicherten bisherigen zweiten Kryptographiedaten, denen ein bisheriges zweites Verfallskriterium zugeordnet ist, in einem zweiten Austauschschritt durch neue zweite Kryptographiedaten ausgetauscht werden, wobei
- der zweite Austauschschritt spätestens nach Erfüllung des bisherigen zweiten Verfallskriteriums durchgeführt wird.

10. Verfahren nach Anspruch 9, **dadurch gekennzeichnet, dass**
- in dem zweiten Austauschschritt eine Kommunikation mit einer entfernten dritten Datenverarbeitungseinrichtung (4) erfolgt,
- die Erfüllung eines den bisherigen zweiten Kryptographiedaten und/oder der zweiten Datenverarbeitungseinrichtung (3) zugeordneten zweiten Austauschkriteriums in der dritten Datenverarbeitungseinrichtung (4) überwacht wird und
- die dritte Datenverarbeitungseinrichtung (4) den zweiten Austauschschritt nach Erfüllung des zweiten Austauschkriteriums initiiert.

11. Verfahren nach Anspruch 9 oder 10, **dadurch gekennzeichnet, dass** das zweite Austauschkriterium durch eine dritte Datenverarbeitungseinrichtung (4) vorgegeben wird.

12. Verfahren nach einem der Ansprüche 9 bis 11, **dadurch gekennzeichnet, dass** die Erfüllung des zweiten Austauschkriteriums vor der Erfüllung des bisherigen zweiten Verfallskriteriums liegt.

13. Verfahren nach einem der Ansprüche 9 bis 12, **dadurch gekennzeichnet, dass** das zweite Verfallskriterium und/oder das zweite Austauschkriterium ein zeitliches Kriterium ist.

14. Verfahren nach einem der Ansprüche 9 bis 13, **dadurch gekennzeichnet, dass** das zweite Verfallskriterium und/oder das zweite Austauschkriterium ein nicht-zeitliches Kriterium ist, insbesondere ein von der Nutzung der zweiten Datenverarbeitungseinrichtung (3) oder von den zweiten Kryptographiedaten abhängiges Kriterium ist.

15. Verfahren nach einem der Ansprüche 9 bis 14, **dadurch gekennzeichnet, dass** den neuen zweiten Kryptographiedaten ein neues zweites Gültigkeitskriterium zugeordnet wird, wobei die Erfüllung des neuen zweiten Gültigkeitskriteriums den Beginn der Gültigkeit der neuen zweiten Kryptographiedaten definiert.

16. Verfahren nach Anspruch 15, **dadurch gekennzeichnet, dass** die Erfüllung des neuen zweiten Gültigkeitskriteriums spätestens mit der Erfüllung des bisherigen zweiten Verfallskriteriums eintritt, insbesondere vor der Erfüllung des bisherigen zweiten Verfallskriteriums eintritt.

17. Verfahren nach Anspruch 15 oder 16, **dadurch gekennzeichnet, dass** die neuen zweiten Kryptographiedaten und die bisherigen zweiten Kryptographiedaten zumindest bis zur Erfüllung des bisherigen zweiten Verfallskriteriums beide in dem zweiten Speicher gespeichert sind.

18. Verfahren nach einem der Ansprüche 15 bis 17, **dadurch gekennzeichnet, dass** das erste Austauschkriterium in Abhängigkeit von dem neuen zweiten Gültigkeitskriterium gewählt wird, insbesondere das erste Austauschkriterium gleich dem neuen zweiten Gültigkeitskriterium gewählt wird.

19. Verfahren nach Anspruch 18, **dadurch gekennzeichnet, dass** das neue zweite Gültigkeitskriterium das Erreichen eines Gültigkeitszeitpunkts der neuen zweiten Kryptographiedaten ist.

20. Verfahren nach einem der vorhergehenden Ansprüche, **dadurch gekennzeichnet, dass** ein gemeinsames erstes Austauschkriterium für eine Anzahl von ersten Datenverarbeitungseinrichtungen vorgegeben wird.

21. Anordnung zum Austausch von einer ersten Datenverarbeitungseinrichtung (2, 6.1, 6.2) zugeordneten ersten Kryptographiedaten, insbesondere eines ersten kryptographischen Schlüssels oder eines ersten kryptographischen Zertifikats, mit
- einer ersten Datenverarbeitungseinrichtung (2, 6.1, 6.2) und
- einer von der ersten Datenverarbeitungseinrichtung (2, 6.1, 6.2) entfernten zweiten Datenverarbeitungseinrichtung (3), die mit der ersten Datenverarbeitungseinrichtung (2, 6.1, 6.2) über ein Kommunikationsnetz (5) verbindbar ist,
wobei
- die erste Datenverarbeitungseinrichtung (2, 6.1, 6.2) einen ersten Speicher (2.33) aufweist,
- in dem ersten Speicher (2.33) die bisherigen ersten Kryptographiedaten, denen ein bisheriges erstes Verfallskriterium zugeordnet ist, gespeichert sind,
- die erste Datenverarbeitungseinrichtung (2, 6.1, 6.2) und die zweite Datenverarbeitungseinrichtung (3) zum Austausch der bisherigen ersten Kryptographiedaten in dem ersten Speicher durch neue erste Kryptographiedaten unter gegenseitiger Kommunikation spätestens nach Erfüllung des bisherigen ersten Verfallskriteriums ausgebildet sind,
- die zweite Datenverarbeitungseinrichtung (3) zur Überwachung der Erfüllung eines den bisherigen ersten Kryptographiedaten und/oder der ersten Datenverarbeitungseinrichtung (2, 6.1, 6.2) zugeordneten ersten Austauschkriteriums ausgebildet ist und
- die zweite Datenverarbeitungseinrichtung (3) zum Initiieren des Austauschs der bisherigen ersten Kryptographiedaten nach Erfüllung des ersten Austauschkriteriums ausgebildet ist,
**dadurch gekennzeichnet, dass**
- die zweite Datenverarbeitungseinrichtung (3) zur Generierung der neuen ersten Kryptographiedaten in Abhängigkeit von der Erfüllung wenigstens eines Generierungskriteriums ausgebildet ist
oder
- die erste Datenverarbeitungseinrichtung (2, 6.1, 6.2) zur Generierung der neuen ersten Kryptographiedaten in Abhängigkeit von der Erfüllung wenigstens eines Generierungskriteriums ausgebildet ist.

22. Anordnung nach Anspruch 21, **dadurch gekennzeichnet, dass** die zweite Datenverarbeitungseinrichtung (3) zum Vorgeben des ersten Austauschkriteriums ausgebildet ist.

23. Anordnung nach Anspruch 21 oder 22, **dadurch gekennzeichnet, dass** die Erfüllung des ersten Austauschkriteriums vor der Erfüllung des bisherigen ersten Verfallskriteriums liegt.

24. Anordnung nach einem der Ansprüche 21 bis 23, **dadurch gekennzeichnet, dass** das erste Verfallskriterium und/oder das erste Austauschkriterium ein zeitliches Kriterium ist.

25. Anordnung nach einem der Ansprüche 21 bis 23, **dadurch gekennzeichnet, dass** das erste Verfallskriterium und/oder das erste Austauschkriterium ein nicht-zeitliches Kriterium ist, insbesondere ein von der Nutzung der ersten Datenverarbeitungseinrichtung (2, 6.1, 6.2) abhängiges Kriterium ist.

26. Anordnung nach einem der Ansprüche 21 bis 25, **dadurch gekennzeichnet, dass**
- die zweite Datenverarbeitungseinrichtung (3) zur Vorgabe eines neuen ersten Gültigkeitskriteriums für die neuen ersten Kryptographiedaten ausgebildet ist, wobei
- die Erfüllung des neuen ersten Gültigkeitskriteriums den Beginn der Gültigkeit der neuen ersten Kryptographiedaten definiert, und
- die Erfüllung des neuen ersten Gültigkeitskriteriums spätestens mit der Erfüllung des bisherigen ersten Verfallskriteriums eintritt, insbesondere vor der Erfüllung des bisherigen ersten Verfallskriteriums eintritt.

27. Anordnung nach Anspruch 26, **dadurch gekennzeichnet, dass** die erste Datenverarbeitungseinrichtung (2, 6.1, 6.2) zum Speichern sowohl der neuen ersten Kryptographiedaten als auch der bisherigen ersten Kryptographiedaten zumindest bis zur Erfüllung des bisherigen ersten Verfallskriteriums in dem ersten Speicher (2.33) ausgebildet ist.

28. Anordnung nach einem der Ansprüche 21 bis 27, **dadurch gekennzeichnet, dass** die zweite Datenverarbeitungseinrichtung (3) zum Modifizieren des ersten Austauschkriteriums bei Abschluss des Austauschs der ersten Kryptographiedaten ausgebildet ist.

29. Anordnung nach einem der Ansprüche 21 bis 28, **dadurch gekennzeichnet, dass** zum Austausch von der zweiten Datenverarbeitungseinrichtung (3) zugeordneten zweiten Kryptographiedaten, insbesondere eines zweiten kryptographischen Schlüssels oder eines zweiten kryptographischen Zertifikats,
- eine dritte Datenverarbeitungseinrichtung (4) vorgesehen ist,
- die zweite Datenverarbeitungseinrichtung (3) einen zweiten Speicher (3.4) aufweist, in dem die bisherigen zweiten Kryptographiedaten, denen ein bisheriges zweites Verfallskriterium zugeordnet ist, gespeichert sind
- die zweite Datenverarbeitungseinrichtung (3) und die dritte Datenverarbeitungseinrichtung (4) zum Austausch der bisherigen zweiten Kryptographiedaten in dem zweiten Speicher (3.4) durch neue zweite Kryptographiedaten unter gegenseitiger Kommunikation spätestens nach Erfüllung des bisherigen zweiten Verfallskriteriums ausgebildet sind.

30. Anordnung nach Anspruch 29, **dadurch gekennzeichnet, dass**
- die dritte Datenverarbeitungseinrichtung (4) zur Überwachung der Erfüllung eines den bisherigen zweiten Kryptographiedaten und/oder der zweiten Datenverarbeitungseinrichtung (3) zugeordneten zweiten Austauschkriteriums ausgebildet ist und
- die dritte Datenverarbeitungseinrichtung (4) zum Initiieren des Austauschs der bisherigen zweiten Kryptographiedaten nach Erfüllung des zweiten Austauschkriteriums ausgebildet ist.

31. Anordnung nach Anspruch 29 oder 30, **dadurch gekennzeichnet, dass** die dritte Datenverarbeitungseinrichtung (4) zur Vorgabe des zweiten Austauschkriteriums ausgebildet ist.

32. Anordnung nach einem der Ansprüche 29 bis 31, **dadurch gekennzeichnet, dass** die Erfüllung des zweiten Austauschkriteriums vor der Erfüllung des bisherigen zweiten Verfallskriteriums liegt.

33. Anordnung nach einem der Ansprüche 29 bis 32, **dadurch gekennzeichnet, dass** das zweite Verfallskriterium und/oder das zweite Austauschkriterium ein zeitliches Kriterium ist.

34. Anordnung nach einem der Ansprüche 29 bis 33, **dadurch gekennzeichnet, dass** das zweite Verfallskriterium und/oder das zweite Austauschkriterium ein nicht-zeitliches Kriterium ist, insbesondere ein von der Nutzung der zweiten Datenverarbeitungseinrichtung abhängiges Kriterium ist.

35. Anordnung nach einem der Ansprüche 29 bis 34, **dadurch gekennzeichnet, dass** den neuen zweiten Kryptographiedaten ein neues zweites Gültigkeitskriterium zugeordnet ist, wobei die Erfüllung des neuen zweiten Gültigkeitskriteriums den Beginn der Gültigkeit der neuen zweiten Kryptographiedaten definiert.

36. Anordnung nach Anspruch 35, **dadurch gekennzeichnet, dass** die Erfüllung des neuen zweiten Gültigkeitskriteriums spätestens mit der Erfüllung des bisherigen zweiten Verfallskriteriums eintritt, insbesondere vor der Erfüllung des bisherigen zweiten Verfallskriteriums eintritt.

37. Anordnung nach Anspruch 35 oder 36, **dadurch gekennzeichnet, dass** die zweite Datenverarbeitungseinrichtung (3) zum Speichern sowohl der neuen zweiten Kryptographiedaten als auch der bisherigen zweiten Kryptographiedaten zumindest bis zur Erfüllung des bisherigen zweiten Verfallskriteriums in dem zweiten Speicher (3.4) ausgebildet ist.

38. Anordnung nach einem der Ansprüche 35 bis 37, **dadurch gekennzeichnet, dass** die dritte Datenverarbeitungseinrichtung (4) zur Vorgabe des ersten Austauschkriteriums in Abhängigkeit von dem neuen zweiten Gültigkeitskriterium ausgebildet ist, insbesondere zur Vorgabe des ersten Austauschkriteriums gleich dem neuen zweiten Gültigkeitskriterium ausgebildet ist.

39. Anordnung nach Anspruch 38, **dadurch gekennzeichnet, dass** das neue zweite Gültigkeitskriterium das Erreichen eines Gültigkeitszeitpunkts der neuen zweiten Kryptographiedaten ist.

40. Anordnung nach einem der Ansprüche 21 bis 39, **dadurch gekennzeichnet, dass** eine erste Anzahl von mit der zweiten Datenverarbeitungseinrichtung (3) verbindbaren ersten Datenverarbeitungseinrichtungen (2, 6.1, 6.2) vorgesehen ist und die zweite Datenverarbeitungseinrichtung (3) zur Vorgabe eines gemeinsamen ersten Austauschkriteriums für eine zweite Anzahl von ersten Datenverarbeitungseinrichtungen (2, 6.1, 6.2) ausgebildet ist.

41. Anordnung nach einem der Ansprüche 21 bis 40, **dadurch gekennzeichnet, dass** die erste Datenverarbeitungseinrichtung (2, 6.1, 6.2) eine Frankiermaschine ist und/oder die zweite Datenverarbeitungseinrichtung (3) eine entfernte Datenzentrale ist.

42. Datenverarbeitungseinrichtung, insbesondere für eine Anordnung nach einem der Ansprüche 21 bis 41, die zum Austausch von einer entfernten Datenverarbeitungseinrichtung (2, 6.1, 6.2) zugeordneten ersten Kryptographiedaten, insbesondere eines ersten kryptographischen Schlüssels oder eines ersten kryptographischen Zertifikats, mit der entfernten Datenverarbeitungseinrichtung (2, 6.1, 6.2) über ein Kommunikationsnetz (5) verbindbar ist, wobei
- die entfernte Datenverarbeitungseinrichtung (2, 6.1, 6.2) einen ersten Speicher (2.33) aufweist,
- in dem ersten Speicher (2.33) die bisherigen ersten Kryptographiedaten, denen ein bisheriges erstes Verfallskriterium zugeordnet ist, gespeichert sind,
- die entfernte Datenverarbeitungseinrichtung (2, 6.1, 6.2) und die Datenverarbeitungseinrichtung (3) zum Austausch der bisherigen ersten Kryptographiedaten in dem ersten Speicher durch neue erste Kryptographiedaten unter gegenseitiger Kommunikation spätestens nach Erfüllung des bisherigen ersten Verfallskriteriums ausgebildet sind,
- die Datenverarbeitungseinrichtung (3) zur Überwachung der Erfüllung eines den bisherigen ersten Kryptographiedaten und/oder der entfernten Datenverarbeitungseinrichtung (2, 6.1, 6.2) zugeordneten ersten Austauschkriteriums ausgebildet ist und
- die Datenverarbeitungseinrichtung (3) zum Initiieren des Austauschs der bisherigen ersten Kryptographiedaten nach Erfüllung des ersten Austauschkriteriums ausgebildet ist,
**dadurch gekennzeichnet, dass**
- die Datenverarbeitungseinrichtung (3) zur Generierung der neuen ersten Kryptographiedaten in Abhängigkeit von der Erfüllung wenigstens eines Generierungskriteriums ausgebildet ist.

43. Datenverarbeitungseinrichtung, insbesondere für eine Anordnung nach einem der Ansprüche 21 bis 41, die zum Austausch von der Datenverarbeitungseinrichtung (2, 6.1, 6.2) zugeordneten ersten Kryptographiedaten, insbesondere eines ersten kryptographischen Schlüssels oder eines ersten kryptographischen Zertifikats, mit einer entfernten Datenverarbeitungseinrichtung (3) über ein Kommunikationsnetz (5) verbindbar ist, wobei
- die Datenverarbeitungseinrichtung (2, 6.1, 6.2) einen ersten Speicher (2.33) aufweist,
- in dem ersten Speicher (2.33) die bisherigen ersten Kryptographiedaten, denen ein bisheriges erstes Verfallskriterium zugeordnet ist, gespeichert sind,
- die Datenverarbeitungseinrichtung (2, 6.1, 6.2) und die entfernte Datenverarbeitungseinrichtung (3) zum Austausch der bisherigen ersten Kryptographiedaten in dem ersten Speicher durch neue erste Kryptographiedaten unter gegenseitiger Kommunikation spätestens nach Erfüllung des bisherigen ersten Verfallskriteriums ausgebildet sind,
- die entfernte Datenverarbeitungseinrichtung (3) zur Überwachung der Erfüllung eines den bisherigen ersten Kryptographiedaten und/oder der Datenverarbeitungseinrichtung (2, 6.1, 6.2) zugeordneten ersten Austauschkriteriums ausgebildet ist und
- die entfernte Datenverarbeitungseinrichtung (3) zum Initiieren des Austauschs der bisherigen ersten Kryptographiedaten nach Erfüllung des ersten Austauschkriteriums ausgebildet ist,
**dadurch gekennzeichnet, dass**
- die Datenverarbeitungseinrichtung (2, 6.1, 6.2) zur Generierung der neuen ersten Kryptographiedaten in Abhängigkeit von der Erfüllung wenigstens eines Generierungskriteriums ausgebildet ist.

## Claims

1. A method for replacing first cryptographic data - in particular a first cryptographic key or a first cryptographic certificate - which are associated with a first data-processing device (2, 6.1, 6.2), wherein
- the previous first cryptographic data, which are stored in a first memory (2.33) of the first data-processing device (2, 6.1, 6.2), and with which a previous first expiry criterion is associated, are replaced in a first replacement step (9.6) with new first cryptographic data,
- a communication with a remote second data-processing device (3) taking place in the first replacement step (9.6),
- the first replacement step (9.6) being carried out at the latest after fulfilment of the previous first expiry criterion, and
- the fulfilment of a first replacement criterion, which is associated with the previous first cryptographic data and/or the first data-processing device (2, 6.1, 6.2), being monitored in the second data-processing device (3), and the second data-processing device (3) initiating the first replacement step (9.6) after fulfilment of the first replacement criterion,
**characterized in that**
- the new first cryptographic data are generated in the first replacement step (9.6), the new first cryptographic data being generated in dependence on the fulfilment of at least one generation criterion.

2. A method according to Claim 1, **characterized in that** the first replacement criterion is predetermined by the second data-processing device (3).

3. A method according to Claim 1 or 2, **characterized in that** the fulfilment of the first replacement criterion is before the fulfilment of the previous first expiry criterion.

4. A method according to one of the preceding claims, **characterized in that** the first expiry criterion and/or the first replacement criterion is a time criterion.

5. A method according to one of Claims 1 to 3, **characterized in that** the first expiry criterion and/or the first replacement criterion is a non-time criterion, in particular a criterion which depends on the usage of the first data-processing device (2, 6.1, 6.2) or on the current first cryptographic data.

6. A method according to one of the preceding claims, **characterized in that**
- a new first validity criterion is associated with the new first cryptographic data, the fulfilment of the new first validity criterion defining the start of the validity of the new first cryptographic data, and
- the fulfilment of the new first validity criterion occurs at the latest with the fulfilment of the previous first expiry criterion, in particular before the fulfilment of the previous first expiry criterion.

7. A method according to Claim 6, **characterized in that** the new first cryptographic data and the previous first cryptographic data are both stored in the first memory at least until fulfilment of the previous first expiry criterion.

8. A method according to one of the preceding claims, **characterized in that** the first replacement criterion is modified at the conclusion of the first replacement step.

9. A method according to one of the preceding claims, **characterized in that** to replace second cryptographic data - in particular a second cryptographic key or a second cryptographic certificate - which are associated with the second data-processing device (3),
- the previous second cryptographic data, which are stored in a second memory (3, 4) of the second data-processing device (3), and with which a previous second expiry criterion is associated, are replaced in a second replacement step with new second cryptographic data,
- the second replacement step being carried out at the latest after fulfilment of the previous second expiry criterion.

10. A method according to Claim 9, **characterized in that**
- a communication with a remote third data-processing device (4) takes place in the second replacement step,
- the fulfilment of a second replacement criterion, which is associated with the previous second cryptographic data and/or the second data-processing device (3), is monitored in the third data-processing device (4), and
- the third data-processing device (4) initiates the second replacement step after fulfilment of the second replacement criterion.

11. A method according to Claim 9 or 10, **characterized in that** the second replacement criterion is predetermined by a third data-processing device (4).

12. A method according to one of Claims 9 to 11, **characterized in that** the fulfilment of the second replacement criterion is before the fulfilment of the previous second expiry criterion.

13. A method according to one of Claims 9 to 12, **characterized in that** the second expiry criterion and/or the second replacement criterion is a time criterion.

14. A method according to one of Claims 9 to 13, **characterized in that** the second expiry criterion and/or the second replacement criterion is a non-time criterion, in particular a criterion which depends on the use of the second data-processing device (3) or on the second cryptographic data.

15. A method according to one of Claims 9 to 14, **characterized in that** a new second validity criterion is associated with the new second cryptographic data, the fulfilment of the new second validity criterion defining the start of the validity of the new second cryptographic data.

16. A method according to Claim 15, **characterized in that** the fulfilment of the new second validity criterion occurs at the latest with the fulfilment of the previous second expiry criterion, in particular before the fulfilment of the previous second expiry criterion.

17. A method according to Claim 15 or 16, **characterized in that** the new second cryptographic data and the previous second cryptographic data are both stored in the second memory at least until fulfilment of the previous second expiry criterion.

18. A method according to one of Claims 15 to 17, **characterized in that** the first replacement criterion is chosen in dependence on the new second validity criterion, in particular the first replacement criterion is chosen to be equal to the new second validity criterion.

19. A method according to Claim 18, **characterized in that** the new second validity criterion is reaching a validity instant of the new second cryptographic data.

20. A method according to one of the preceding claims, **characterized in that** a common first replacement criterion is predetermined for a number of first data-processing devices.

21. An arrangement for replacing first cryptographic data - in particular a first cryptographic key or a first cryptographic certificate -which are associated with a first data-processing device (2, 6.1, 6.2), having
- a first data-processing device (2, 6.1, 6.2), and
- a second data-processing device (3) which is remote from the first data-processing device (2, 6.1, 6.2), and can be connected to the first data-processing device (2, 6.1, 6.2) via a communications network (5),
wherein
- the first data-processing device (2, 6.1, 6.2) has a first memory (2.33),
- the previous first cryptographic data, with which a previous first expiry criterion is associated, are stored in the first memory (2.33),
- the first data-processing device (2, 6.1, 6.2) and second data-processing device (3) are adapted to replace the previous first cryptographic data in the first memory with new first cryptographic data by mutual communication at the latest after fulfilment of the previous first expiry criterion,
- the second data-processing device (3) is adapted to monitor the fulfilment of a first replacement criterion which is associated with the previous first cryptographic data and/or the first data-processing device (2, 6.1, 6.2), and
- the second data-processing device (3) is adapted to initiate the replacement of the previous first cryptographic data after fulfilment of the first replacement criterion,
**characterized in that**
- the second data-processing device (3) is adapted to generate the new first cryptographic data in dependence on the fulfilment of at least one generation criterion,
or
- the first data-processing device (2, 6.1, 6.2) is adapted to generate the new first cryptographic data in dependence on the fulfilment of at least one generation criterion.

22. An arrangement according to Claim 21, **characterized in that** the second data-processing device (3) is adapted to predetermine the first replacement criterion.

23. An arrangement according to Claim 21 or 22, **characterized in that** the fulfilment of the first replacement criterion is before the fulfilment of the previous first expiry criterion.

24. An arrangement according to one of Claims 21 to 23, **characterized in that** the first expiry criterion and/or the first replacement criterion is a time criterion.

25. An arrangement according to one of Claims 21 to 23, **characterized in that** the first expiry criterion and/or the first replacement criterion is a non-time criterion, in particular a criterion which depends on the use of the first data-processing device (2, 6.1, 6.2).

26. An arrangement according to one of Claims 21 to 25, **characterized in that**
- the second data-processing device (3) is adapted to predetermine a new first validity criterion for the new first cryptographic data,
- fulfilment of the new first validity criterion defines the start of the validity of the new first cryptographic data, and
- the fulfilment of the new first validity criterion occurs at the latest with the fulfilment of the previous first expiry criterion, in particular before the fulfilment of the previous first expiry criterion.

27. An arrangement according to Claim 26, **characterized in that** the first data-processing device (2, 6.1, 6.2) is adapted to store both the new first cryptographic data and the previous first cryptographic data in the first memory (2.33) at least until fulfilment of the previous first expiry criterion.

28. An arrangement according to one of Claims 21 to 27, **characterized in that** the second data-processing device (3) is adapted to modify the first replacement criterion at the conclusion of the replacement of the first cryptographic data.

29. An arrangement according to one of Claims 21 to 28, **characterized in that** to replace second cryptographic data - in particular a second cryptographic key or a second cryptographic certificate - which are associated with the second data-processing device (3),
- a third data-processing device (4) is provided,
- the second data-processing device (3) has a second memory (3.4), in which the previous second cryptographic data, with which a previous second expiry criterion is associated, are stored,
- the second data-processing device (3) and third data-processing device (4) are adapted to replace the previous second cryptographic data in the second memory (3.4) with new second cryptographic data by mutual communication at the latest after fulfilment of the previous second expiry criterion.

30. An arrangement according to Claim 29, **characterized in that**
- the third data-processing device (4) is adapted to monitor the fulfilment of a second replacement criterion which is associated with the previous second cryptographic data and/or the second data-processing device (3), and
- the third data-processing device (4) is adapted to initiate the replacement of the previous second cryptographic data after fulfilment of the second replacement criterion.

31. An arrangement according to Claim 29 or 30, **characterized in that** the third data-processing device (4) is adapted to predetermine the second replacement criterion.

32. An arrangement according to one of Claims 29 to 31, **characterized in that** the fulfilment of the second replacement criterion is before the fulfilment of the previous second expiry criterion.

33. An arrangement according to one of Claims 29 to 32, **characterized in that** the second expiry criterion and/or the second replacement criterion is a time criterion.

34. An arrangement according to one of Claims 29 to 33, **characterized in that** the second expiry criterion and/or the second replacement criterion is a non-time criterion, in particular a criterion which depends on the use of the second data-processing device.

35. An arrangement according to one of Claims 29 to 34, **characterized in that** a new second validity criterion is associated with the new second cryptographic data, the fulfilment of the new second validity criterion defining the start of the validity of the new second cryptographic data.

36. An arrangement according to Claim 35, **characterized in that** the fulfilment of the new second validity criterion occurs at the latest with the fulfilment of the previous second expiry criterion, in particular before the fulfilment of the previous second expiry criterion.

37. An arrangement according to Claim 35 or 36, **characterized in that** the second data-processing device (3) is adapted to store both the new second cryptographic data and the previous second cryptographic data in the second memory (3.4) at least until fulfilment of the previous second expiry criterion.

38. An arrangement according to one of Claims 35 to 37, **characterized in that** the third data-processing device (4) is adapted to predetermine the first replacement criterion in dependence on the new second validity criterion, in particular to predetermine the first replacement criterion to be equal to the new second validity criterion.

39. An arrangement according to Claim 38, **characterized in that** the new second validity criterion is reaching a validity instant of the new second cryptographic data.

40. An arrangement according to one of Claims 21 to 39, **characterized in that** a first number of first data-processing devices (2, 6.1, 6.2) which can be connected to the second data-processing device (3) is provided, and the second data-processing device (3) is adapted to predetermine a common first replacement criterion for a second number of first data-processing devices (2, 6.1, 6.2).

41. An arrangement according to one of Claims 21 to 40, **characterized in that** the first data-processing device (2, 6.1, 6.2) is a franking machine, and/or the second data-processing device (3) is a remote data centre.

42. A data-processing device, in particular for an arrangement according to one of Claims 21 to 41, which can be connected via a communication network (5) to a remote data-processing device (2, 6.1, 6.2) for replacing first cryptographic data - in particular a first cryptographic key or a first cryptographic certificate - which are associated with the remote data-processing device (2, 6.1, 6.2), wherein
- the remote data-processing device (2, 6.1, 6.2) has a first memory (2.33),
- the previous first cryptographic data, with which a previous first expiry criterion is associated, are stored in the first memory (2.33),
- the remote data-processing device (2, 6.1, 6.2) and the data-processing device (3) are adapted to replace the previous first cryptographic data in the first memory with new first cryptographic data by mutual communication at the latest after fulfilment of the previous first expiry criterion,
- the data-processing device (3) is adapted to monitor the fulfilment of a first replacement criterion which is associated with the previous first cryptographic data and/or the remote data-processing device (2, 6.1, 6.2), and
- the data-processing device (3) is adapted to initiate the replacement of the previous first cryptographic data after fulfilment of the first replacement criterion,
**characterized in that**
- the data-processing device (3) is adapted to generate the new first cryptographic data in dependence on the fulfilment of at least one generation criterion.

43. Data-processing device, in particular for an arrangement according to one of Claims 21 to 41, which can be connected via a communication network (5) to a remote data-processing device (2, 6.1, 6.2) for replacing first cryptographic data - in particular a first cryptographic key or a first cryptographic certificate - which are associated with the data-processing device (2, 6.1, 6.2), wherein
- the data-processing device (2, 6.1, 6.2) has a first memory (2.33),
- the previous first cryptographic data, with which a previous first expiry criterion is associated, are stored in the first memory (2.33),
- the data-processing device (2, 6.1, 6.2) and the remote data-processing device (3) are adapted to replace the previous first cryptographic data in the first memory with new first cryptographic data by mutual communication at the latest after fulfilment of the previous first expiry criterion,
- the remote data-processing device (3) is adapted to monitor the fulfilment of a first replacement criterion which is associated with the previous first cryptographic data and/or the data-processing device (2, 6.1, 6.2), and
- the remote data-processing device (3) is adapted to initiate the replacement of the previous first cryptographic data after fulfilment of the first replacement criterion,
**characterized in that**
- the data-processing device (2, 6.1, 6.2) is adapted to generate the new first cryptographic data in dependence on the fulfilment of at least one generation criterion.

## Revendications

1. Procédé de remplacement de premières données cryptographiques, associées à un premier dispositif de traitement de données (2, 6.1, 6.2), en particulier d'une première clé cryptographique ou d'un premier certificat cryptographique, selon lequel
- les premières données cryptographiques antérieures, qui sont stockées dans une première mémoire (2.33) du premier dispositif de traitement de données (2, 6.1, 6.2) et auxquelles est associé un premier critère de validité antérieur, sont remplacées, au cours d'un premier pas de remplacement (9.6), par de nouvelles premières données cryptographiques, sachant que
- au premier pas de remplacement (9.6), une communication a lieu avec un deuxième dispositif de traitement de données (3) distant,
- le premier pas de remplacement (9.6) est exécuté au plus tard après la réalisation du premier critère d'expiration antérieur, et
- la réalisation d'un premier critère de remplacement, associé aux premières données cryptographiques antérieures et/ou au premier dispositif de traitement de données (2, 6.1, 6.2), est surveillée dans le deuxième dispositif de traitement de données (3), et le deuxième dispositif de traitement de données (3) déclenche le premier pas de remplacement (9.6), après la réalisation du premier critère de remplacement,
**caractérisé par le fait que**
- les nouvelles premières données cryptographiques sont générées au premier pas de remplacement (9.6), la génération des nouvelles premières données cryptographiques s'effectuant en fonction de la réalisation d'au moins un critère de génération.

2. Procédé selon la revendication 1, **caractérisé par le fait que** le premier critère de remplacement est prédéterminé par le deuxième dispositif de traitement de données (3).

3. Procédé selon la revendication 1 ou 2, **caractérisé par le fait que** la réalisation du premier critère de remplacement précède la réalisation du premier critère d'expiration antérieur.

4. Procédé selon une des revendications précédentes, **caractérisé par le fait que** le premier critère d'expiration et/ou le premier critère de remplacement est un critère de temps.

5. Procédé selon une des revendications 1 à 3, **caractérisé par le fait que** le premier critère d'expiration et/ou le premier critère de remplacement est un critère non temporel, en particulier un critère dépendant de l'utilisation du premier dispositif de traitement de données (2, 6.1, 6.2) ou des premières données cryptographiques actuelles.

6. Procédé selon une des revendications précédentes, **caractérisé par le fait que**
- un nouveau premier critère de validité est associé aux nouvelles premières données cryptographiques, la réalisation dudit nouveau premier critère de validité définissant le début de la validité des nouvelles premières données cryptographiques, et
- la réalisation du nouveau premier critère de validité survenant au plus tard avec la réalisation du premier critère d'expiration antérieur, notamment avant la réalisation du premier critère d'expiration antérieur.

7. Procédé selon la revendication 6, **caractérisé par le fait que** les nouvelles premières données cryptographiques et les premières données cryptographiques antérieures sont enregistrées dans la première mémoire, au moins jusqu'à la réalisation du premier critère d'expiration antérieur.

8. Procédé selon une des revendications précédentes, **caractérisé par le fait que** le premier critère de remplacement est modifié à la fin du premier pas de remplacement.

9. Procédé selon une des revendications précédentes, **caractérisé par le fait que** pour remplacer des deuxièmes données cryptographiques associées au deuxième dispositif de traitement de données (3), en particulier une deuxième clé cryptographique ou un deuxième certificat cryptographique,
- les deuxièmes données cryptographiques antérieures, qui sont stockées dans une deuxième mémoire (3.4) du deuxième dispositif de traitement de données (3) et auxquelles est associé un deuxième critère d'expiration antérieur, sont remplacées, au cours d'un deuxième pas de remplacement, par de nouvelles deuxièmes données cryptographiques, sachant que
- le deuxième pas de remplacement est exécuté au plus tard après la réalisation du deuxième critère d'expiration antérieur.

10. Procédé selon la revendication 9, **caractérisé par le fait que**
- au deuxième pas de remplacement, une communication a lieu avec un troisième dispositif de traitement de données (4) distant,
- la réalisation d'un deuxième critère de remplacement, associé aux deuxièmes données cryptographiques antérieures et/ou au deuxième dispositif de traitement de données (3), est surveillée dans le troisième dispositif de traitement de données (4), et
- le troisième dispositif de traitement de données (4) déclenche le deuxième pas de remplacement, après la réalisation du deuxième critère de remplacement.

11. Procédé selon la revendication 9 ou 10, **caractérisé par le fait que** le deuxième critère de remplacement est prédéterminé par un troisième dispositif de traitement de données (4).

12. Procédé selon une des revendications 9 à 11, **caractérisé par le fait que** la réalisation du deuxième critère de remplacement précède la réalisation du deuxième critère d'expiration antérieur.

13. Procédé selon une des revendications 9 à 12, **caractérisé par le fait que** le deuxième critère d'expiration et/ou le deuxième critère de remplacement est un critère de temps.

14. Procédé selon une des revendications 9 à 13, **caractérisé par le fait que** le deuxième critère d'expiration et/ou le deuxième critère de remplacement est un critère non temporel, en particulier un critère dépendant de l'utilisation du deuxième dispositif de traitement de données (3) ou des deuxièmes données cryptographiques.

15. Procédé selon une des revendications 9 à 14, **caractérisé par le fait qu'**un nouveau deuxième critère de validité est associé aux nouvelles deuxièmes données cryptographiques, la réalisation dudit nouveau deuxième critère de validité définissant le début de la validité des nouvelles deuxièmes données cryptographiques.

16. Procédé selon la revendication 15, **caractérisé par le fait que** la réalisation du nouveau deuxième critère de validité survient au plus tard avec la réalisation du deuxième critère d'expiration antérieur, en particulier avant la réalisation du deuxième critère d'expiration antérieur.

17. Procédé selon la revendication 15 ou 16, **caractérisé par le fait que** les nouvelles deuxièmes données cryptographiques et les deuxièmes données cryptographiques antérieures sont enregistrées dans la deuxième mémoire, au moins jusqu'à la réalisation du deuxième critère d'expiration antérieur.

18. Procédé selon une des revendications 15 à 17, **caractérisé par le fait que** le premier critère de remplacement est choisi en fonction du nouveau deuxième critère de validité, et qu'en particulier le premier critère de remplacement est choisi pour être identique au nouveau deuxième critère de validité.

19. Procédé selon la revendication 18, **caractérisé par le fait que** le nouveau deuxième critère de validité est l'arrivée à un moment de validité des nouvelles deuxièmes données cryptographiques.

20. Procédé selon une des revendications précédentes, **caractérisé par le fait qu'**un premier critère de remplacement commun est prédéterminé pour un certain nombre de premiers dispositifs de traitement de données.

21. Agencement pour le remplacement de premières données cryptographiques, associées à un premier dispositif de traitement de données (2, 6.1, 6.2), en particulier d'une première clé cryptographique ou d'un premier certificat cryptographique, comprenant
- un premier dispositif de traitement de données (2, 6.1, 6.2) et
- un deuxième dispositif de traitement de données (3) qui est situé à distance du premier dispositif de traitement de données (2, 6.1, 6.2) et peut être connecté au premier dispositif de traitement de données (2, 6.1, 6.2) via un réseau de communication (5),
où
- le premier dispositif de traitement de données (2, 6.1, 6.2) présente une première mémoire (2.33),
- les premières données cryptographiques antérieures, auxquelles est associé un premier critère d'expiration antérieur, sont stockées dans la première mémoire (2.33),
- le premier dispositif de traitement de données (2, 6.1, 6.2) et le deuxième dispositif de traitement de données (3) sont conçus pour remplacer les premières données cryptographiques antérieures dans la première mémoire par de nouvelles premières données cryptographiques, par le biais d'une communication réciproque, au plus tard après la réalisation du premier critère d'expiration antérieur,
- le deuxième dispositif de traitement de données (3) est conçu pour surveiller la réalisation d'un premier critère de remplacement associé aux premières données cryptographiques antérieures et/ou au premier dispositif de traitement de données (2, 6.1, 6.2), et
- le deuxième dispositif de traitement de données (3) est conçu pour déclencher le remplacement des premières données cryptographiques antérieures, après la réalisation du premier critère de remplacement,
**caractérisé par le fait que**
- le deuxième dispositif de traitement de données (3) est conçu pour générer les nouvelles premières données cryptographiques, en fonction de la réalisation d'au moins un critère de génération,
ou
- le premier dispositif de traitement de données (2, 6.1, 6.2) est conçu pour générer les nouvelles premières données cryptographiques, en fonction de la réalisation d'au moins un critère de génération.

22. Agencement selon la revendication 21, **caractérisé par le fait que** le deuxième dispositif de traitement de données (3) est conçu pour prédéterminer le premier critère de remplacement.

23. Agencement selon la revendication 21 ou 22, **caractérisé par le fait que** la réalisation du premier critère de remplacement précède la réalisation du premier critère d'expiration antérieur.

24. Agencement selon une des revendications 21 à 23, **caractérisé par le fait que** le premier critère d'expiration et/ou le premier critère de remplacement est un critère de temps.

25. Agencement selon une des revendications 21 à 23, **caractérisé par le fait que** le premier critère d'expiration et/ou le premier critère de remplacement est un critère non temporel, en particulier un critère dépendant de l'utilisation du premier dispositif de traitement de données (2, 6.1, 6.2).

26. Agencement selon une des revendications 21 à 25, **caractérisé par le fait que**
- le deuxième dispositif de traitement de données (3) est conçu pour prédéterminer un nouveau premier critère de validité pour les nouvelles premières données cryptographiques, sachant que
- la réalisation du nouveau premier critère de validité définit le début de la validité des nouvelles premières données cryptographiques,
- la réalisation du nouveau premier critère de validité survient au plus tard avec la réalisation du premier critère d'expiration antérieur, en particulier avant la réalisation du premier critère d'expiration antérieur.

27. Agencement selon la revendication 26, **caractérisé par le fait que** le premier dispositif de traitement de données (2, 6.1, 6.2) est conçu pour enregistrer dans la première mémoire (2.33), aussi bien les nouvelles premières données cryptographiques que les premières données cryptographiques antérieures, au moins jusqu'à la réalisation du premier critère d'expiration antérieur.

28. Agencement selon une des revendications 21 à 27, **caractérisé par le fait que** le deuxième dispositif de traitement de données (3) est conçu pour modifier le premier critère de remplacement à la fin du remplacement des premières données cryptographiques.

29. Agencement selon une des revendications 21 à 28, **caractérisé par le fait que** pour remplacer des deuxièmes données cryptographiques associées au deuxième dispositif de traitement de données (3), en particulier une deuxième clé cryptographique ou un deuxième certificat cryptographique,
- il est prévu un troisième dispositif de traitement de données (4),
- le deuxième dispositif de traitement de données (3) présente une deuxième mémoire (3.4) dans laquelle sont stockées les deuxièmes données cryptographiques antérieures, auxquelles est associé un deuxième critère d'expiration antérieur,
- le deuxième dispositif de traitement de données (3) et le troisième dispositif de traitement de données (4) sont conçus pour remplacer les deuxièmes données cryptographiques antérieures dans la deuxième mémoire (3.4) par de nouvelles deuxièmes données cryptographiques, par le biais d'une communication réciproque, au plus tard après la réalisation du deuxième critère d'expiration antérieur.

30. Agencement selon la revendication 29, **caractérisé par le fait que**
- le troisième dispositif de traitement de données (4) est conçu pour surveiller la réalisation d'un deuxième critère de remplacement associé aux deuxièmes données cryptographiques antérieures et/ou au deuxième dispositif de traitement de données (3), et
- le troisième dispositif de traitement de données (4) est conçu pour déclencher le remplacement des deuxièmes données cryptographiques antérieures, après la réalisation du deuxième critère de remplacement.

31. Agencement selon la revendication 29 ou 30, **caractérisé par le fait que** le troisième dispositif de traitement de données (4) est conçu pour prédéterminer le deuxième critère de remplacement.

32. Agencement selon une des revendications 29 à 31, **caractérisé par le fait que** la réalisation du deuxième critère de remplacement précède la réalisation du deuxième critère d'expiration antérieur.

33. Agencement selon une des revendications 29 à 32, **caractérisé par le fait que** le deuxième critère d'expiration et/ou le deuxième critère de remplacement est un critère de temps.

34. Agencement selon une des revendications 29 à 33, **caractérisé par le fait que** le deuxième critère d'expiration et/ou le deuxième critère de remplacement est un critère non temporel, en particulier un critère dépendant de l'utilisation du deuxième dispositif de traitement de données.

35. Agencement selon une des revendications 29 à 34, **caractérisé par le fait qu'**un nouveau deuxième critère de validité est associé aux nouvelles deuxièmes données cryptographiques, la réalisation dudit nouveau deuxième critère de validité définissant le début de la validité des nouvelles deuxièmes données cryptographiques.

36. Agencement selon la revendication 35, **caractérisé par le fait que** la réalisation du nouveau deuxième critère de validité survient au plus tard avec la réalisation du deuxième critère d'expiration antérieur, en particulier avant la réalisation du deuxième critère d'expiration antérieur.

37. Agencement selon la revendication 35 ou 36, **caractérisé par le fait que** le deuxième dispositif de traitement de données (3) est conçu pour enregistrer dans la deuxième mémoire (3.4), aussi bien les nouvelles deuxièmes données cryptographiques que les deuxièmes données cryptographiques antérieures, au moins jusqu'à la réalisation du deuxième critère d'expiration antérieur.

38. Agencement selon une des revendications 35 à 37, **caractérisé par le fait que** le troisième dispositif de traitement de données (4) est conçu pour prédéterminer le premier critère de remplacement, en fonction du nouveau deuxième critère de validité, en particulier pour prédéterminer le premier critère de remplacement de manière à ce qu'il soit identique au nouveau deuxième critère de validité.

39. Agencement selon la revendication 38, **caractérisé par le fait que** le nouveau deuxième critère de validité est l'arrivée à un moment de validité des nouvelles deuxièmes données cryptographiques.

40. Agencement selon une des revendications 21 à 39, **caractérisé par le fait qu'**il est prévu un premier nombre de premiers dispositifs de traitement de données (2, 6.1, 6.2) pouvant être connectés au deuxième dispositif de traitement de données (3), et que le deuxième dispositif de traitement de données (3) est conçu pour prédéterminer un premier critère de remplacement commun pour un deuxième nombre de premiers dispositifs de traitement de données (2, 6.1, 6.2).

41. Agencement selon une des revendications 21 à 40, **caractérisé par le fait que** le premier dispositif de traitement de données (2, 6.1, 6.2) est une machine à affranchir et/ou le deuxième dispositif de traitement de données (3) est un centre de données distant.

42. Dispositif de traitement de données, en particulier pour un agencement selon une des revendications 21 à 41, qui, pour remplacer des premières données cryptographiques, associées à un dispositif de traitement de données (2, 6.1, 6.2) distant, notamment une première clé cryptographique ou un premier certificat cryptographique, peut être connecté au dispositif de traitement de données (2, 6.1, 6.2) distant, via un réseau de communication (5), où
- le dispositif de traitement de données (2, 6.1, 6.2) distant présente une première mémoire (2.33),
- les premières données cryptographiques antérieures, auxquelles est associé un premier critère d'expiration antérieur, sont stockées dans la première mémoire (2.33),
- le dispositif de traitement de données (2, 6.1, 6.2) distant et le dispositif de traitement de données (3) sont conçus pour remplacer les premières données cryptographiques antérieures dans la première mémoire par de nouvelles premières données cryptographiques, par le biais d'une communication réciproque, au plus tard après la réalisation du premier critère d'expiration antérieur,
- le dispositif de traitement de données (3) est conçu pour surveiller la réalisation d'un premier critère de remplacement associé aux premières données cryptographiques antérieures et/ou au dispositif de traitement de données (2, 6.1, 6.2) distant, et
- le dispositif de traitement de données (3) est conçu pour déclencher le remplacement des premières données cryptographiques antérieures, après la réalisation du premier critère de remplacement,
**caractérisé par le fait que**
- le dispositif de traitement de données (3) est conçu pour générer les nouvelles premières données cryptographiques, en fonction de la réalisation d'au moins un critère de génération.

43. Dispositif de traitement de données, en particulier pour un agencement selon une des revendications 21 à 41, qui, pour remplacer des premières données cryptographiques, associées au dispositif de traitement de données (2, 6.1, 6.2), notamment une première clé cryptographique ou un premier certificat cryptographique, peut être connecté à un dispositif de traitement de données (3) distant, via un réseau de communication (5), où
- le dispositif de traitement de données (2, 6.1, 6.2) présente une première mémoire (2.33),
- les premières données cryptographiques antérieures, auxquelles est associé un premier critère d'expiration antérieur, sont stockées dans la première mémoire (2.33),
- le dispositif de traitement de données (2, 6.1, 6.2) et le dispositif de traitement de données (3) distant sont conçus pour remplacer les premières données cryptographiques antérieures dans la première mémoire par de nouvelles premières données cryptographiques, par le biais d'une communication réciproque, au plus tard après la réalisation du premier critère d'expiration antérieur,
- le dispositif de traitement de données (3) distant est conçu pour surveiller la réalisation d'un premier critère de remplacement associé aux premières données cryptographiques antérieures et/ou au dispositif de traitement de données (2, 6.1, 6.2) distant, et
- le dispositif de traitement de données (3) distant est conçu pour déclencher le remplacement des premières données cryptographiques antérieures, après la réalisation du premier critère de remplacement,
**caractérisé par le fait que**
- le dispositif de traitement de données (2, 6.1, 6.2) est conçu pour générer les nouvelles premières données cryptographiques, en fonction de la réalisation d'au moins un critère de génération.
